(19) Europäisches Patentamt
European Patent Office
Office européen des brevets

(11) **EP 4 604 356 A1**

(12) **EUROPEAN PATENT APPLICATION**

(43) Date of publication:
**20.08.2025 Bulletin 2025/34**

(21) Application number: **25154312.0**

(22) Date of filing: **28.01.2025**

(51) International Patent Classification (IPC):
*H02J 13/00* (2006.01)   *F24F 11/47* (2018.01)
*G05B 13/04* (2006.01)   *H02J 7/34* (2006.01)
*F24F 11/46* (2018.01)   *G05B 15/02* (2006.01)
*H02J 3/00* (2006.01)

(52) Cooperative Patent Classification (CPC):
**H02J 7/34; F24F 11/46; F24F 11/47; G05B 13/048; G05B 15/02; H02J 13/00004;** H02J 2203/20; H02J 2310/12

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2024 EP 24158081**

(71) Applicant: **HONDA MOTOR CO., LTD.**
**Tokyo 105-8404 (JP)**

(72) Inventors:
• **Schmitt, Thomas**
  **63073 Offenbach (DE)**
• **Engel, Jens**
  **63073 Offenbach (DE)**

(74) Representative: **Roth, Sebastian**
**Mitscherlich PartmbB**
**Patent- und Rechtsanwälte**
**Karlstraße 7**
**80333 München (DE)**

(54) **ENERGY MANAGEMENT SYSTEM AND METHOD WITH MITIGATION OF INFORMATION ASYMMETRY**

(57)     A computer-implemented method for an energy management system comprising at least one subsystems, the method comprises determining, by an aggregator module based on aggregated information for the energy management system, an energy budget and at least one setpoint for each subsystem. The method further comprises determining, by energy distributor modules associated with each subsystem based on specific information for the associated subsystem, a desired additional energy budget based on the respective determined energy budgets and the at least one setpoint, wherein each subsystem is associated with an individual energy distributor module. The energy distributer modules further predict a performance loss of each subsystem based on the energy budget compared to a sum of the energy budget and the desired additional energy budget for the at least one setpoint. Each energy distributor module communicates the desired additional energy budget and performance loss to the aggregator module. The aggregator module determines a granted additional energy budget for each subsystem based on the desired additional energy budget and the predicted performance loss for each subsystem, and generates an energy budget plan based on the determined granted additional energy budget for each subsystem. The method includes controlling the energy management system based on the energy budget plan for each subsystem.

Fig. 3

**Description**

The disclosure is in the field of energy management systems and model predictive control of energy management systems. In particular, the disclosure presents an energy management system and a computer-implemented method using hierarchical model predictive control for the energy management system.

Energy management systems (EMS) having a hierarchical system structure are generally known. The hierarchical system structure may have two levels or layers, e.g., an aggregator layer (aggregator module, hereinafter shortly referred to as aggregator) and an energy distributor layer (distributor module, energy distributor module, hereinafter shortly referred to as distributor or energy distributor). In an energy management system, for example of a building, the aggregator layer determines energy budgets and setpoints for the building infrastructure systems based on an aggregated perspective known to the aggregator layer, e.g. taking into account disturbances affecting the overall system (the building in the present example) such as a general ambient air temperature for a heating/cooling system. The aggregator layer determines the energy budgets and setpoints for all components or subsystems of the building jointly including, e.g., electric energy budgets and thermal energy budgets jointly. The distributor layer may include plural energy distributors, each distributor associated with an individual or separate, disjunct subsystem of the entire system, i.e., the building infrastructure. The energy distributor distributes energy budgets and tracks setpoints based on a detailed perspective compared to the aggregator's perspective, e.g. local perspective and a specific information base of the subsystem. Subsystems may distinguish from each other by different time domains, regarding different dynamic characteristics of the subsystems, or only considering specific components of a building infrastructure system. Different subsystems may include, but are not limited to HVAC systems or electric vehicle charging stations (EVCS) in a subsystem.

US 2018/ 004171 A1 discloses a building HVAC system, which includes an airside system having a plurality of airside subsystems, a waterside system, a high-level model predictive controller (MPC), and a plurality of low-level airside MPCs. Each airside subsystem includes airside HVAC equipment configured to provide heating or cooling to the airside subsystem. The waterside system includes waterside HVAC equipment configured to produce thermal energy used by the airside system for providing the heating or cooling. The high-level MPC is configured to perform a high-level optimization to generate an optimal airside subsystem load profile for each of the plurality of airside subsystems. The optimal airside subsystem load profiles optimize a total cost of energy consumed by the airside system and the waterside system. Each of the low-level airside MPCs is configured to operate the airside HVAC equipment of an airside subsystem according to the load profile for the airside subsystem.

US 2015/198345 A1 discloses a HVAC system that comprises a system controller configured to receive an input of an energy budget for the HVAC system for a specified period-of-time. The system controller is configured to determine a set point for the HVAC system that will cause an amount of energy used in operating the HVAC system over the specified period-of-time to meet the energy budget, and to operate the HVAC system at the set point.

US 2015/045962 A1 discloses systems and methods for limiting power consumption by a HVAC subsystem of a building. A feedback controller is used to generate a manipulated variable based on an energy use setpoint and a measured energy use. The manipulated variable may be used for adjusting the operation of a HVAC device.

Publication "Regression-based model error compensation for hierarchical MPC building energy management system", by Thomas Schmitt et al., arxiv.org, Cornell University Library, 201 OLIN Library Cornell University Ithaca, NY 14853, XP091539040, discloses an energy management system that combines a MPC approach with a data-driven error model compensation. The hierarchical MPC approach consists of two layers including an aggregator, which controls the overall energy flows of the building in an aggregated perspective, while a distributor distributes heating and cooling powers to individual temperature zones. The controllers of both layers employ regression-based error estimation to predict and incorporate the model error.

However, usually an information asymmetry exists between the energy distributor and the aggregator. The aggregator determines energy budgets on a less detailed level, aggregates parameters and often fails in regarding details that are not known at the aggregator level of the building, or that the aggregator neglects in order to solve the control problem with acceptable resources.

Thus, energy budgets derived by an aggregator may not be sufficient to achieve the intended objectives of the specific building infrastructure system for each subsystem. This problem becomes more severe when considering plural subsystems of widely varying technical characteristics, e.g., electric vehicle charging systems, lighting systems, HVAC systems all being integrated in one energy management system of the building, and receiving energy from a wide range of sources including the electricity grid, local renewable energy sources providing thermal or electric energy, or via cogeneration (power-heat coupling) systems.

Thus, energy management systems with a hierarchical structure may be subject for improvement by addressing the information asymmetry between different layers of the hierarchical energy management system.

The computer-implemented method in a first aspect and the energy management system in a second aspect provide an advantageous solution for this and similar problems. The dependent claims define further advantageous embodiments.

**EP 4 604 356 A1**

The first aspect is a computer-implemented method for an energy management system comprising at least one subsystem, wherein the method comprises: determining, by an aggregator module based on aggregated information for the energy management system, an energy budget and at least one setpoint for each subsystem. At least one energy distributor module, associated with each one of the at least one subsystems, determines based on specific information for the respective associated subsystem, a desired additional energy budget based on the respective determined energy budget and the at least one setpoint. Each subsystem is associated with an individual energy distributor module. The at least one energy distributor module each predicts a performance loss of the associated subsystem, for the case that the aggregator module does not grant the respective desired additional energy budget, based on only the energy budget compared to a sum of the energy budget and the desired additional energy budget for the at least one setpoint. Each energy distributor module communicates its desired additional energy budget and performance loss to the aggregator module. The aggregator module determines a granted additional energy budget for each subsystem based on the desired additional energy budget and the predicted performance loss for each subsystem. The aggregator module generates an energy budget plan based on the determined granted additional energy budget for each subsystem. The energy management system controls the energy management system based on the energy budget plan for each subsystem.

The performance loss of a subsystem can be determined as the difference in performance of the subsystem between a performance of the subsystem when providing the energy budget increased by the desired additional energy budget to the subsystem, and the performance of the subsystem when providing only the energy budget to the subsystem. The performance loss is accordingly a difference in performance of the subsystem, and measured in the units of the performance of the subsystem. Two specific examples for subsystems, a thermal subsystem and a EV charging subsystem with their respective performance are discussed in more detail with an embodiment. The performance loss corresponds to cost for not granting the desired additional energy budget.

The inventive method introduces a communication of aggregated information between the aggregator module (aggregator) and the energy distributor module(s) (distributors), hence between the layers of the energy management system. The aggregator module determines and provides to the energy distributor modules the energy budget and at least one setpoint for each subsystem. The energy distributors determine and provide to the aggregator, the individual desired additional energy budgets and the respective performance losses if the aggregator does not grant the respective desired additional energy budget. The aggregated information communicated between the aggregator and the distributor(s) enables to implement a negotiation, preferably in one single iteration, that overcomes the information asymmetry existing between the different layers of the hierarchical energy management system. The method enables to benefit from the hierarchical approach for energy management systems, and determining control solutions for the control problem with decoupling of the individual layers, while the method adds exchanging simultaneously aggregated information between the individual layers and regarding aggregated information on each individual layer. Hence, an improved control performance is achieved, without significantly increasing communication requirements between layers and without increasing complexity of the control problem that has to be solved for achieving the control objectives of the energy management system.

The aggregated information includes information that is valid for the entire energy management system, but may actually differ from the corresponding specific information for the subsystems. E.g., an ambient air temperature for a building may differ from a specific (e.g., local) ambient air temperature of a particular thermal zone of the building. A general temperature of 21 °C associated as a convenient temperature for humans may differ for a thermal zone including a workshop, for which a specific temperature of 19 °C may be more suitable, while an office environment may be considered more comfortable when having a specific temperature of 23°C. The computer-implemented method overcomes, e.g., the problems, which an information mismatch between the aggregator and the distributor(s), e.g. due to modeling errors introduced when aggregating specific information for use on the aggregator level may introduce.

Specific information for the subsystem may include, e.g., local information, or information on particular disturbances for the subsystem, that influence a solution of the control problem formulated for the particular subsystem.

The computer-implemented method may associate, by the aggregator, each determined desired additional energy budget with an additional cost value.

The method may include determining, by the aggregator, the energy budget and at least one setpoint for each subsystem for a prediction horizon, determining, by the aggregator, the granted additional energy budget for each subsystem and the predicted performance loss for each subsystem for each time step of the prediction horizon; and determining, by the aggregator, the granted additional energy budget for each subsystem for each time step of the prediction horizon.

The computer-implemented method according to an embodiment includes determining, by the aggregator, the energy budget and the at least one setpoint for each subsystem by optimizing a metric calculated based on at least one of aggregated monetary cost, temperature setpoints, and charge satisfaction levels for the energy management system.

According to an embodiment of the computer-implemented method, the method includes estimating aggregated thermal disturbances acting on a building based on a model trained via machine learning using training data in a training phase; and determining, by the aggregator, the energy budget and the at least one setpoint for each subsystem further

3

based on the aggregated thermal disturbances.

The computer-implemented method according to an embodiment includes, in the step of determining, by the aggregator, the energy budget and the at least one setpoint for each subsystem, converting electric energy to thermal energy, or converting thermal energy to electric energy.

This is particularly useful for controlling energy management systems that include a combined heat and power generating capability (CHP system, cogeneration system). Alternatively or additionally, the coupling of thermal energy and electric energy may originate from heat pumps or air conditioning systems of the building infrastructure.

According to an embodiment, the computer-implemented method includes determining, by the aggregator, the energy budget and the at least one setpoint for each subsystem by solving an optimal control problem, in particular, an optimal control problem for multiple cost functions according to

$$\min \sum_k w_{costs} J_{costs}(k) + w_{comf} J_{comf}(k) + w_{sat} J_{sat}(k)$$

with discrete time step k, weights $w_{costs}$, $w_{comf}$, and $w_{sat}$ for the cost functions, and the cost functions $J_{costs}$ for monetary cost, $J_{comf}$, for thermal comfort cost, and $J_{sat}$, for a charging satisfaction.

The computer-implemented method according to an embodiment includes determining, by the aggregator, the granted additional energy budget as a fraction n of the desired additional energy budget of each subsystem, wherein the fraction n is equal or larger than 0 and smaller or equal to 1.

According to an embodiment, the computer-implemented method includes determining, by each energy distributor module, the desired additional energy budget for each subsystem to achieve the at least one setpoint of the subsystem or to achieve an optimal control behavior of the subsystem.

The computer-implemented method according to an embodiment includes the at least one energy distributor module including at least one thermal energy distributor module that controls a thermal behavior of individual building zones of a building by distributing a thermal energy budget and determining an intended additional thermal energy budget based on solving a control problem, and solving the control problem includes minimizing a sum of weighted squared temperature deviations from a temperature setpoint for individual thermal zones.

A building may include a plurality of building parts that each constitute individual thermal zones. Each thermal zone may be characterized by specific thermal characteristics, ambient temperatures, temperature setpoints, heating capacity or cooling capacity by thermal actuators, and thermal losses, in order to name some examples for such thermal characteristics.

According to an embodiment of the computer-implemented method the at least one thermal energy distributor module solves the control problem including estimated thermal disturbances of the individual thermal zones.

The computer-implemented method according to an embodiment includes, by the at least one thermal energy distributor module, estimating the thermal disturbances based on a model trained via machine learning on training data in a training phase.

According to an embodiment of the computer-implemented method the at least one thermal energy distributor module predicts the performance loss of the subsystem by calculating an estimated comfort loss for the individual thermal zones.

The comfort loss of a thermal zone corresponds to a difference in ambient temperature in the thermal zone of the building. Thus, the comfort loss has the unit of a temperature, e. g., °C. The performance loss of the thermal subsystem can be determined as the difference in temperatures of the respective thermal zones of the thermal subsystem between a temperature of the subsystem when providing the energy budget increased by the desired additional energy budget to the thermal subsystem, and the performance of the thermal subsystem when providing only the energy budget to the thermal subsystem, without adding the desired additional energy budget.

The computer-implemented method according to an embodiment has the at least one thermal energy distributor module calculating the estimated comfort loss based on the intended additional thermal energy budget compensating the estimated thermal disturbances of the individual thermal zones; or the at least one thermal energy distributor module calculates the estimated comfort loss based on simulating with a predetermined model an influence of the uncompensated estimated thermal disturbances of the individual thermal zones.

According to an embodiment of the computer-implemented method, the at least one thermal energy distributor module uses the predetermined model for calculating the estimated comfort loss and further for solving the control problem including estimated thermal disturbances on the individual thermal zones.

The computer-implemented method according to an embodiment has the at least one energy distributor module include at least one electric vehicle charging station energy distributor that controls charging processes at individual electric vehicle charging stations by distributing an electric charging energy budget and determining an intended additional charging energy budget based on solving a control problem; and solving the control problem includes maximizing a sum of a charging satisfaction measure for the individual electric vehicle charging stations that are connected with vehicles.

According to an embodiment of the computer-implemented method, the at least one electric vehicle charging station energy distributor module determines charging losses of the connected vehicles using a predetermined model trained via machine learning on training data in a training phase.

The computer-implemented method according to an embodiment has the at least one electric vehicle charging station energy distributor module predicting the performance loss of an electric vehicle charging station subsystem by estimating a charging satisfaction loss for the individual electric vehicle charging stations.

The charging satisfaction loss of the electric vehicle charging station subsystem corresponds to a difference in state of charge of a vehicle charged at a charging station of the electric vehicle charging station subsystem. Thus, the charging satisfaction loss has the unit of electric energy, e. g., Ws or Joule. The performance loss of the electric vehicle charging station subsystem can be determined as the difference in state of charge of the respective electric vehicle batteries of the electric vehicle charging station subsystem between a state of charge of the subsystem when providing the energy budget increased by the desired additional energy budget to the electric vehicle charging station subsystem and the performance of the electric vehicle charging station subsystem when providing only the energy budget to the electric vehicle charging station subsystem, without adding the desired additional energy budget.

According to an embodiment of the computer-implemented method, the aggregator determines the granted additional energy budget for each subsystem based on the desired additional energy budget and the predicted performance loss for each subsystem by solving an optimal control problem for multiple cost functions according to,

$$\min \sum_k w_{costs} J_{costs}(k) + w_{comf} \left( J_{comf}(k) + \left(1 - p_1(k)\right) \cdot I_{comf}(k) \right)$$

$$+ w_{sat} \left( J_{sat}(k) + \left(1 - p_2(k)\right) \cdot I_{sat}(k) \right)$$

with discrete time step k, weights $w_{costs}$, $w_{comf}$, and $w_{sat}$ for the cost functions, the cost functions $J_{costs}$ for monetary cost, $J_{comf}$, for thermal comfort cost, and $J_{sat}$, charging satisfaction cost, and a parameter p; (k) denoting the fraction of the granted intended additional energy budget of the energy distributors i, i =1, 2 .

The energy management system according to a second aspect includes at least one subsystem. The system comprises an aggregator module configured to determine, based on aggregated information for the energy management system, an energy budget and at least one setpoint for each subsystem. The system further comprises at least one energy distributor module associated with each subsystem. The at least one energy distributor module is configured to determine based on specific information for the associated subsystem, a desired additional energy budget based on the respective determined energy budget and the at least one setpoint. Each subsystem is associated with an individual energy distributor. The at least one energy distributor module is further configured to predict a performance loss of the associated subsystem for the case that the aggregator module does not grant the respective desired additional energy budget based on the energy budget compared to a sum of the energy budget and the desired additional energy budget for the at least one setpoint. Each energy distributor module is further configured to communicate the desired additional energy budget and the performance loss to the aggregator module. The aggregator module is further configured to determine a granted additional energy budget for each subsystem based on the desired additional energy budget and the predicted performance loss for each subsystem, and to generate an energy budget plan based on the determined granted additional energy budget for each subsystem. At least one controller of the energy management system is configured to control the energy management system based on the energy budget plan for each subsystem.

The energy management system of the second aspect may be implemented in corresponding embodiments as discussed with reference to the computer-implemented method according to the first aspect. The energy management system of the second aspects may achieve corresponding advantageous effects as discussed with reference to the computer-implemented method according to the first aspect.

The following description of embodiments refers to the figures, in which

Fig. 1 shows a schematic flow diagram of a computer-implemented method according to an embodiment;

Fig. 2 presents a general structure of the proposed hierarchical control approach;

Fig. 3 illustrates in a diagram a negotiation process between the aggregator and the energy distributor representing two layers in the proposed approach;

Fig. 4 shows a comparison of the building zone temperature $\vartheta_b$ between a simulation without and with error compensation, both without negotiation between the layers as known from prior art;

Fig. 5A shows temperatures $\theta_i$ of the individual building temperature zones of zones 1-7, without error compensation and without negotiation;

Fig. 5B shows temperatures $\theta_i$ of the individual building temperature zones of zones 1-7 with error compensation and without negotiation;

Fig. 5C shows temperatures $\theta_i$ of the individual building temperature zones of zones 1-7 with both error compensation and negotiation;

Fig. 6 shows a comparison between the mean absolute error (MAE) of the residual model error without error compensation and with error compensation in each temperature zone;

Fig. 7 shows a comparison between the root mean square error (RMSE) of the tracking error between the reference temperature $\vartheta_b$ and individual building zone temperatures $\theta_i$ in zones 1-7, without error compensation and without negotiation, with error compensation and without negotiation, and with both error compensation and negotiation; and

Fig. 8 presents an overview on a high level of abstraction of a hardware architecture of the proposed energy management system 20.

In the below provided detailed explanation, some aspects known in the art are explained briefly only in order to avoid overloading the description of the present invention. However, for some of these aspects reference is made to publications providing a more detailed insight. The respective reference list is attached at the end of the description.

In the figures, corresponding elements have the same reference signs. The discussion of the figures avoids discussion of same reference signs in different figures wherever considered possible without adversely affecting comprehensibility and avoiding unnecessary repetitions for sake of conciseness.

The following description of an embodiment discusses the energy management system as an energy management system for a building. However, other applications of the energy management system may also be possible, e.g. in the mobility sector, e.g., energy management for a vessel or other types of vehicles.

Before the details of the present invention are discussed in detail, the known technology and the underlying problem of the invention shall be summarized.

The increasing influx of renewable energy sources (RESs) into the public power grid leads to an increasing demand for intelligent energy management systems (EMSs) for buildings. The most popular control method for such EMSs is Model Predictive Control (MPC). For EMSs of large-scale buildings such as company buildings or factories, hierarchical MPC has attracted interest in the past years. In contrast to normal monolithic MPC, the overall control problem is decomposed into multiple layers in a hierarchical structure. A central upper layer acts as an aggregator that determines overall reference trajectories or budgets from a high-level perspective. The lower layer(s) act as distributor(s) that track or distribute the high-level plan from a more detailed low-level perspective. One advantage of the decomposition into a hierarchy is better scalability of the underlying optimization problems, e.g., if the building consists of many temperature zones. Another is that different layers may run at different time scales, allowing for a decoupling of slow and fast dynamical processes or decisions. Most often for building EMSs, a hierarchical structure is used to decompose the control of heating, ventilation, and air conditioning (HVAC) systems, but there are also notable examples where it is used for the integration of electric vehicles (EVs) as described for example in [1].

In some approaches, the aggregator only determines optimal temperature setpoints for a distributor, which can then freely decide on the actual thermal energy requirements. In other approaches, the aggregator instead provides both reference temperatures as well as thermal budgets. Underlying any MPC approach is a model of the building under study. There are multiple methodologies.

One possible approach in building EMS is to use residual estimators to directly predict heat disturbances acting on the building, caused through occupant behavior and ambient effects. These represent one of the largest error sources in buildings. Integrating these estimators into the model of the MPC of the EMS allows for explicit error compensation. It is known to train a feed-forward artificial neural network (ANN) to estimate the heat disturbance in a single-zone building based on time information (and ambient temperature). Further, it is also possible to predict the temperature of the thermal mass of the zone envelope from past zone temperature measurements using an additional ANN. In [2], the authors use an XGBoost regressor to estimate the model error as a time-variant heat disturbance for a multi-zone building, based on time information, ambient temperature and building load.

In hierarchical control schemes, such error compensation can introduce side effects, if differently composed information is available at different layers. In an aggregator-distributor scheme, thermal budgets or setpoints are derived from aggregated information, including an aggregated estimated model error. If heating and cooling influences appear simultaneously across different temperature zones, these influences cancel each other in the aggregated perspective.

Thus, they are invisible to the aggregator, which therefore may derive wrong thermal budgets or suboptimal setpoints. This can have a significant influence on overall control performance [2]. According to the present invention, a hierarchical MPC approach for the control of a multi-zone building is proposed, which

- includes data-driven error compensation through heat influence prediction,

- and accounts for information mismatch between layers by introducing a one-iteration

The energy management system 20 of an embodiment may include, e.g., the energy management of a factory that includes a heating, ventilating and air conditioning (HVAC) subsystem for multiple thermal zones of the building, and multiple electric vehicle charging stations (EVCS) of an EVCS subsystem.

The aggregator regards its control problem on an aggregated perspective of the individual thermal zones as one aggregated building zone, e.g. a temperature of the aggregated zone is determined as a weighted average of the individual thermal zones of the building. The aggregator regards a thermal capacity and a coupling to the environment of the building as sum of all individual building zones.

The aggregator regards the control problem based on an aggregated perspective of EVCS subsystem as one aggregated EVCS (AEVCS), which includes the energy or capacity of electric vehicles present at the AEVCS as a sum of energy or capacity at each individual EVCS of the subsystem.

The aggregator regards the available charging power for the AEVCS subsystem as a sum of charging power at each EVCS of the EVCS subsystem.

The aggregator determines the energy budgets and the setpoints for the objectives by solving a control problem using the aggregated information available at the aggregator layer to achieve its objectives: the objectives include, minimizing general monetary costs generated by all thermal subsystems and electrical subsystems.

The aggregator determines the energy budgets and the setpoints for the objectives by solving a control problem for achieving the objective of maximizing a thermal comfort in the building. The thermal comfort may be defined by a deviation of building zone temperature from a set building temperature, e.g., 22°C.

The aggregator determines the energy budgets and the setpoints for the objectives by solving a control problem for achieving the objective of a charging satisfaction generated by charging vehicles that are connected at the AEVCS subsystem. The charging satisfaction may be defined, e.g., by a state of charge (SoC) of vehicle batteries at departure of the electric vehicles.

By solving the control problem based on the aggregated information, the aggregator determines thermal and electrical budgets for the entire (overall) energy management system 20 of the building including the AEVCS subsystem, and, e.g. temperature setpoints for the building zone.

The exemplary energy management system 20 includes two energy distributors, e.g. a thermal energy distributor associated with the HVAC subsystem (thermal subsystem, heating/cooling subsystem) and an EVCS energy distributor associated with the EVCS subsystem.

The thermal energy distributor distributes a thermal budget of the thermal subsystem to individual thermal zones of the building. The thermal energy distributor determines a control problem with the objective of minimizing a weighted sum of a deviation of zone temperatures of the individual zones from the temperature setpoint.

The EVCS energy distributor distributes an electric energy budget for the AEVCS subsystem between the individual EVCS of the EVCS subsystem. The EVCS energy distributor distributes an electric energy budget for the AEVCS subsystem by solving the control problem with the objective of maximizing the individual charging satisfaction of electric vehicles connected with the individual EVCS.

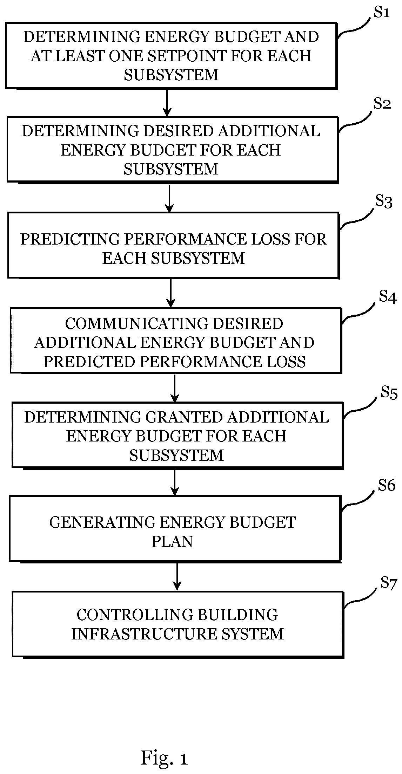

Fig. 1 shows a schematic flow diagram of a computer-implemented method according to an embodiment.

The computer-implemented method is performed in an energy management system 20 comprising one or more subsystems.

In step S1, the method determines, by an aggregator (aggregator module) based on aggregated information for the energy management system 20, an energy budget and at least one setpoint for each subsystem.

The energy management system 20 may include one or plural subsystems. For each subsystem, the energy management system 20 comprises one associated energy distributor (energy distributor module).

The method continues with energy distributors associated with the subsystems determining based on specific information for the subsystems, desired additional energy budgets based on the respective determined energy budgets and the at least one setpoint. Each subsystem is associated with an individual energy distributor and receives information on the associated energy budget determined by the aggregator and the corresponding setpoints from the aggregator.

In step S3, the energy distributors associated with the subsystems predict a performance loss of the subsystem based on a comparison of the energy budget with a sum of the energy budget and the desired additional energy budget for the at least one setpoint.

The method then proceeds in step S4 with communicating, by each of the energy distributors, the desired additional energy budget and performance loss to the aggregator.

The aggregator determines in step S5 individual granted additional energy budgets for each subsystem based on the desired additional energy budgets and the predicted performance loss for each subsystem.

In step S6, the aggregator generates an energy budget plan based on the determined granted additional energy budget for each subsystem.

The method then controls the energy management system 20 based on the energy budget plan for each subsystem in step S7.

By performing the processing of an embodiment of the computer-implemented method, the energy management system 20 mitigates asymmetries in information between the individual layers including the aggregator and the energy distributors of the hierarchical energy management system 20.

The thermal energy distributor may regard additional knowledge in form of specific information on individual thermal zones of the building that have a non-homogenous spatial distribution or spatial size over the building controlled by the energy management system 20. Contrary thereto, the aggregator uses aggregated information alleging a homogenous spatial distribution of the individual thermal zones over the building.

A further example for the information asymmetry for the thermal subsystem includes the individual thermal zones in the building may not be able to actuate homogenously. The aggregator uses aggregated information alleging a homogenous actuation, e.g. heating and cooling capability for the individual thermal zones over the entire building. Contrary thereto, the thermal energy distributor has specific information on the heating and cooling capability of each individual thermal zone of the building.

A further example for the information asymmetry for the thermal subsystem includes the aggregator relying on aggregated information that alleges a thermal coupling between the individual thermal zones of the building. The thermal coupling results in leveraging the effects of heating disturbances and cooling disturbances. The thermal energy distributor may have specific information on a weak or non-existing thermal coupling between at least some of the individual thermal zones of the building, thereby changing the control problem to be solved on the thermal energy distributor layer when compared with the control problem taking into regard the aggregated information on the aggregator layer.

An example for the information asymmetry for the EVCS subsystem includes the aggregator relying on aggregated information that alleges a sum of capacities of electric vehicles connected with the individual EVCSs of the EVCS subsystem being from a continuous range of values. Nevertheless, the EVCS energy distributor may have specific information on the discrete number of electric vehicles present, e.g. connected with the individual EVCS.

A further example for the information asymmetry for the EVCS subsystem includes the aggregator relying on aggregated information that alleges a sum of charging constraints for charging the electric vehicles connected with the individual EVCSs of the EVCS subsystem. The aggregated information may neglect the individual charging constraints of the actually connected electric vehicles, e.g., a minimum state of charge (SoC), or a required SoC at the time of departure of the actually connected electric vehicle. Nevertheless, the EVCS energy distributor may have specific information on the charging parameters and constraints of individual electric vehicles present, e.g. connected with the individual EVCS of the EVCS subsystem.

A further example for the information asymmetry for the EVCS subsystem includes the aggregator relying on aggregated information that has no knowledge or only basic assumptions on available power and power efficiency of the individual EVCS of the EVCS subsystem. Nevertheless, the EVCS energy distributor may have specific information on the self-discharging parameters and charging inefficiencies of the individual EVCS of the EVCS subsystem connected with electric vehicles.

The following detailed discussion of an embodiment bases on an energy management system 20 for a building including an aggregator and a thermal energy distributor. Nevertheless, the aspects discussed before with respect to the EVCS energy distributor enable to implement embodiments of the computer-implemented method and the energy management system 20 that implement corresponding energy distributors, e.g. the EVCS energy distributor with corresponding technical features to the thermal energy distributor of the following specific embodiment.

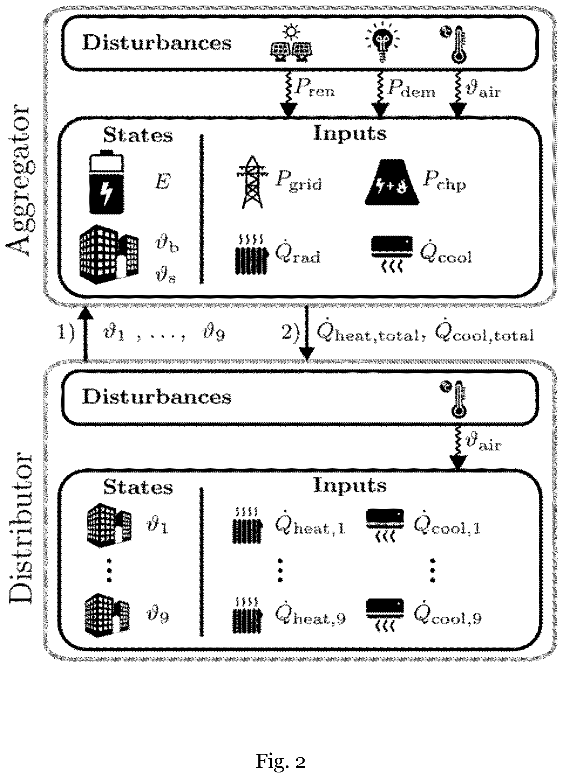

Fig. 2 presents a general structure of the proposed hierarchical control approach.

The aggregator plans operation of electrical and aggregated thermal components, the energy distributor (distributor) distributes the thermal budgets between individual temperature zones i of the building.

For the explanation of details of the present invention, an exemplary, medium-sized company building is considered. Its footprint of approx. 13,000 $m^2$ is partitioned into nine distinct temperature zones, including offices, halls, workshops and an emissions lab. Apart from a connection to the public power grid, a gas-fired combined heat and power plant (CHP) for coproduction of electricity and heat with 199 kW$_{el}$, and a photovoltaic (PV) plant with 750 kWp serve as energy sources, which supply an average load demand of approx. 250 kW. Thermal energy is supplied by using gas-fired heating boilers and an electric HVAC system. Furthermore, a second-life battery with 98 kWh capacity is available as electrical energy storage [3]. The model used in the control approach is split into two layers: An aggregator, representing the overall, aggregated perspective of the entire building, and a distributor (energy distributor), controlling the thermal behavior of the nine individual temperature zones.

The aggregator comprises at least one processor for performing the necessary calculations, which are described in more detail below and a memory for storing the collected data and models. The aggregator comprises interfaces for receiving and transmitting data including necessary information for performing the calculations. The interfaces connect the aggregator to the external systems used for supplying the building with energy like the above-mentioned systems (public power grid, gas-fired combined heat, power plant photovoltaic plant,...), but also to the distributors to enable data transfer to and from the distributors. Each distributor has a similar structure with interfaces, a memory and at least one processor for executing calculations and data exchange with the aggregator. The aggregator and the distributors can be realized as individual entities, for example computers, but also use a common hardware structure on which dedicated software modules are installed and executed. This structure is illustrated in Fig. 2. In the following, the models of these two layers corresponding to the respective software modules are described. Furthermore, a brief description of the digital twin model used for evaluation purposes is given.

The aggregator represents the overall building, including both its thermal and electrical components. The aggregator is modelled using a simplified state space model representing the most important entities. Of the total nine temperature zones, seven are aggregated as a single 'building zone' with an average temperature $\theta_b$. The remaining two zones refer to server rooms and are aggregated with an average 'server zone' temperature $\theta_s$. Together with the stationary battery's stored energy E in kWh, these temperatures form the state vector $x_{agg}$. As input $u_{agg}$ to the system, we consider the grid power $P_{grid}$, the (electrical) CHP power $P_{chp}$, the gas heating power $\dot{Q}_{rad}$, and the HVAC cooling power $\dot{Q}_{cool}$.

The PV power PPV, the building's electrical load demand $P_{dem}$, the ambient air temperature $\vartheta_{air}$, (constant) losses to the ground $\dot{Q}_{other,b}$, and (constant) internal heatings $\dot{Q}_{other,s}$ are considered as disturbances $d_{agg}$. The unit of all electrical and thermal powers is kW, and that of all temperatures is °C. With this, the time-continuous state space description of the model is given by

$$
\begin{bmatrix} \dot{E}(t) \\ \dot{\vartheta}_b(t) \\ \dot{\vartheta}_s(t) \end{bmatrix} = \begin{bmatrix} 0 & 0 & 0 \\ 0 & -\frac{H_{air,b}-\beta_{bs}}{C_{th,b}} & \frac{\beta_{bs}}{C_{th,b}} \\ 0 & \frac{\beta_{bs}}{C_{th,s}} & -\frac{H_{air,s}-\beta_{bs}}{C_{th,s}} \end{bmatrix} \begin{bmatrix} E(t) \\ \vartheta_b(t) \\ \vartheta_s(t) \end{bmatrix}
$$

$$
+ \begin{bmatrix} 1 & 1 & 0 & \frac{1}{\varepsilon_c} & \frac{1}{\varepsilon_c} \\ 0 & \frac{1}{c_{cur}\cdot C_{th,b}} & \frac{1}{C_{th,b}} & \frac{1}{C_{th,b}} & 0 \\ 0 & 0 & 0 & 0 & \frac{1}{C_{th,s}} \end{bmatrix} \begin{bmatrix} P_{grid}(t) \\ P_{chp}(t) \\ \dot{Q}_{rad}(t) \\ \dot{Q}_{cool,b}(t) \\ \dot{Q}_{cool,s}(t) \end{bmatrix}
$$

$$
+ \begin{bmatrix} 1 & 1 & 0 & 0 & 0 \\ 0 & 0 & \frac{H_{air,b}}{C_{th,b}} & \frac{1}{C_{th,b}} & 0 \\ 0 & 0 & \frac{H_{air,s}}{C_{th,s}} & 0 & \frac{1}{C_{th,s}} \end{bmatrix} \begin{bmatrix} P_{ren}(t) \\ P_{dem}(t) \\ \vartheta_{air}(t) \\ \dot{Q}_{other,b}(t) \\ \dot{Q}_{other,s}(t) \end{bmatrix}, \qquad (1)
$$

where $C_{th,b}$ and $C_{th,s}$ are the thermal capacities of the building and server zone, respectively, in kWh/K, $H_{air,b}$ and $H_{air,s}$ are the heat transfer coefficients to the ambient air of the building and the server zone, respectively, in kW/K, $\beta_{bs}$ is the heat transfer coefficient between the two zones in kW/K. Numerical values are given in table 1. The variable $c_{cur}$ is the ratio of the CHP's electrical to thermal power and $\varepsilon_c$ is the energy efficiency ratio of the cooling machines. Their values are given in table 3. The values assumed for the constant heat losses and gains $\dot{Q}_{other,b}$ and $\dot{Q}_{other,s}$ are given in table 2. In the following, the disclosure only uses its discretized state space form. Furthermore, as initially motivated, the disclosure considers a residual model error of the presented gray-box model for the building and server zone temperatures, i.e.,

$$
x_{agg}(k+1) = A_{agg}(T_s)x_{agg}(k) + B_{agg}(T_s)u_{agg}(k)
$$
$$
+ S_{agg}(T_s)d_{agg}(k) + \epsilon_{agg}(k) \qquad (2)
$$

with $\varepsilon_{agg}(k) = [0, \varepsilon_b(k), \varepsilon_s(k)]^T$ and $T_s$ being the sampling rate in h. The disclosure considers the residual model error $\varepsilon_{agg}$ as an additive, time-variant disturbance, as this is a good approximation of the main sources of error in buildings, namely unknown internal heat flows caused by occupant behavior, which are independent of state and inputs, as well as heat flows to and from the environment, which are mainly dependent on external influences (e. g. ambient temperature, solar irradiation), assuming the building stays close to a certain temperature setpoint. Note that the disclosure can respect the

model error $\varepsilon_{agg}$(k) only in the discretized form since it is estimated from discretely sampled data points. For more details on the modeling itself, reference is made to document [4].

The distributor represents the nine individual temperature zones from a thermal perspective, neglecting the electrical part of the building, which is covered by the aggregator. The temperature $\vartheta_i$ of zone i is described by

$$\dot{\vartheta}_i(t) = \frac{1}{C_{\mathrm{th},i}} \left( \dot{Q}_{\mathrm{heat},i}(t) + \dot{Q}_{\mathrm{cool},i}(t) + \dot{Q}_{\mathrm{other},i}(t) \right)$$
$$- \sum_{j \neq i} \frac{\beta_{ij}}{C_{\mathrm{th},i}} \left( \vartheta_i(t) - \vartheta_j(t) \right)$$
$$- \frac{H_{\mathrm{air},i}}{C_{\mathrm{th},i}} \left( \vartheta_i(t) - \vartheta_{\mathrm{air}}(t) \right) \tag{3}$$

with $C_{th,i}$ being the thermal capacity of zone i in kWh/K, $\beta_{ij}$ the heat transfer coefficient between zones i and j in kW/K, $H_{air,i}$ the heat transfer coefficient between zone i and the outside air in kW/K, and $\dot{Q}_{heat}$,i and $\dot{Q}_{cool,i}$ in kW the heating and cooling powers allocated to zone i. Analogous to the aggregator, $\dot{Q}_{other,i}$ denote uncontrollable disturbances, which are assumed constant and represent heat losses to the ground for the building zones 1-7 or internal heat gains for the server zones 8 and 9. The values assumed for these heat flows are listed in table 2. Analogously to the aggregator, a residual model error $\varepsilon_i$ in each temperature zone is considered.

With the nine zone temperatures $\vartheta_i$ making up the state vector $x_{dis}$, $\dot{Q}_{heat,i}$ and $\dot{Q}_{cool,i}$ the input vector $u_{dis}$, the ambient temperature $\vartheta_{air}$ and $Q_{other,i}$, the disturbance vector $d_{dis}$, and residual model errors $\varepsilon_{dis}(k) = [\varepsilon_1(k) ... \varepsilon_9(k)]^T$, the discrete state-space model of the distributor can be expressed by

$$x_{\mathrm{dis}}(k+1) = A_{\mathrm{dis}}(T_s) x_{\mathrm{dis}}(k) + B_{\mathrm{dis}}(T_s) u_{\mathrm{dis}}(k)$$
$$+ S_{\mathrm{dis}}(T_s) d_{\mathrm{dis}}(k) + \epsilon_{\mathrm{dis}}(k), \tag{4}$$

where $A_{dis}$ is the system matrix, $B_{dis}$ the input matrix and $S_{dis}$ the disturbance matrix. $T_s$ again denotes the sampling time. Numerical values are given in table 1. For details, reference is made to document [4], chapter 2, for more details on the state space model.

Table 1

| Numerical values of the building parameters. Note that $C_{\mathrm{th,b}} = \sum_{i=1}^{7} C_{\mathrm{th},i}$, $C_{\mathrm{th,s}} = C_{\mathrm{th,8}} + C_{\mathrm{th,9}}$, $H_{\mathrm{air,b}} = \sum_{i=1}^{7} H_{\mathrm{air},i}$, $H_{\mathrm{air,s}} = H_{\mathrm{air,9}}$, $\beta_{\mathrm{bs}} = \beta_{29} + \beta_{58} + \beta_{68}$, $\beta_{ji}$, and all other $\beta_{ij}$ not listed below are zero, e.g. $\beta = 0$ | | | | | |
|---|---|---|---|---|---|
| | in kWh/K | | in kW/K | | in kW/K |
| $C_{th,1}$ | 289.40 | $H_{air,1}$ | 3.69 | $\beta_{29}$ | 48.40 |
| $C_{th,2}$ | 595.01 | $H_{air,2}$ | 9.82 | $\beta_{34}$ | 345.60 |
| $C_{th,3}$ | 268.58 | $H_{air,3}$ | 3.65 | $\beta_{56}$ | 1100.48 |
| $C_{th,4}$ | 129.96 | $H_{air,4}$ | 2.79 | $\beta_{58}$ | 23.40 |
| $C_{th,5}$ | 413.82 | $H_{air,5}$ | 4.79 | $\beta_{68}$ | 8.00 |
| $C_{th,6}$ | 413.82 | $H_{air,6}$ | 6.19 | | |
| $C_{th,7}$ | 124.67 | $H_{air,7}$ | 3.19 | | |
| $C_{th,8}$ | 3.01 | $H_{air,8}$ | 0.03 | | |
| $C_{th,9}$ | 6.02 | $H_{air,9}$ | 0.04 | | |

Table 2

| Static heat losses to the ground (Zone 1-7) and internal heat gains (Zones 8 and 9) $\dot{Q}_{other,i}$ assumed to act on the individual temperature zones. Note that $\dot{Q}_{other,b} = \sum_{i=1}^{7} \dot{Q}_{other,i}$ $\dot{Q}_{other,s} = \sum_{i=8}^{9} \dot{Q}_{other,i}$. | | | | | |
|---|---|---|---|---|---|
| | kW | | kW | | kW |
| $\dot{Q}_{other,1}$ | -10.58 | $\dot{Q}_{other,4}$ | 0 | $\dot{Q}_{other,7}$ | -4.56 |
| $\dot{Q}_{other,2}$ | -13.10 | $\dot{Q}_{other,5}$ | -16.64 | $\dot{Q}_{other,8}$ | 16.87 |
| $\dot{Q}_{other,3}$ | -10.80 | $\dot{Q}_{other,6}$ | 0 | $\dot{Q}_{other,9}$ | 51.71 |
| $\dot{Q}_{other,b}$ | -58.58 | $\dot{Q}_{other,s}$ | 68.58 | | |

Table 3

| Parameters of the considered building EMS | | |
|---|---|---|
| Parameter | Description | Value |
| $T_s$ | Sample rate | 0.5h |
| $N_p$ | Prediction horizon | 48 ≙ 24h |
| $c_{peak}^{grid}$ | Peak cost factor | 101€/kW |
| $c_{buy}^{grid}$ | Electricity cost | 0.13€/kWh |
| $c_{sell}^{grid}$ | Feed-in Tariff | 0.07€/kW |
| $c_{gas}$ | Gas costs | 0.045€/kWh |
| $\varepsilon_c$ | Energy efficienty ratio of the cooling machines | 1.78 |
| $c_{cur}$ | Power-to-heat ratio of the CHP | 0.677 |
| $\eta_{chp}$ | Efficiency of the CHP | 0.892 |
| $\eta_{rad}$ | Efficiency of the gas radiator | 0.97 |
| $P_{grid,max}$ | Maximum grid power | 1000kW |
| $P_{chp,max}$ | Maximum CHP power | 199kW |
| $\dot{Q}_{rad,max}$ | Maximum gas heating power | 1500kW |
| $\dot{Q}_{cool,b,max}$ | Maximum building zone cooling power | -1353kW |
| $\dot{Q}_{cool,s,max}$ | Maximum server zone cool ing power | -197kW |
| $C_{bat}$ | Second-life baterry capac ity | 98kWh |
| $P_{charge,max}$ | Maximum battery charge power | 32.9kW |
| $P_{grid,peak(0)}$ | Initial peak grid demand | 474.6kW |

As a surrogate of the real facility, a Modelica-based digital twin model implemented in SimulationX is employed as described for example in [5]. This digital twin is a physical white-box model, encompassing nine different temperature zones. It covers their connections and the heat losses to both the ambient air and the ground. Moreover, it takes into account internal heat gains from electrical usage and building occupancy. Additionally, it features a detailed HVAC system. This model deviates from the state-space model, presented earlier, in its ability to capture the nonlinear dynamics and efficiencies of the zones, HVAC, and CHP systems. For example, the digital twin model incorporates the CHP's minimum power output of 50 percent and the HVAC's efficiency that varies with ambient temperature. The model uses historic measurement data for ambient temperature, solar irradiation and PV power, as well as the electrical power demand in each zone.

As described above, a residual model error $\varepsilon(k)$ in both aggregator and distributor is considered. In the hierarchical control approach presented here, this unknown residual error is compensated. The goal is to design an estimator $\tilde{\varepsilon}(k)$ of this residual error $\varepsilon(k)$, such that $\tilde{\varepsilon}(k) \approx \varepsilon(k)$, which can be achieved follows the approach developed in [2].

Integrating the estimator into the control approach allows for active compensation of the model error and thus improved control performance. It is assumed that the time-variant model error represents unknown internal and external influences. While these influences are unknown and difficult to model explicitly, they are by nature strongly correlated with observable and predictable data. The estimators are therefore implemented using machine learning regression models. For each temperature zone in the distributor $i = 1, \ldots, 9$, an estimator $\tilde{\epsilon}_i(k)$ is trained. The estimators in the aggregator are the weighted sum of the individual zone estimators, which is analogous to $\vartheta_b$ and $\vartheta_s$ being the weighted averages of the individual zone temperatures $\vartheta_i$, i.e.

$$\tilde{\epsilon}_{\mathrm{b}}(k) = \frac{\sum_{i=1}^{7} C_{\mathrm{th},i} \cdot \tilde{\epsilon}_i(k)}{\sum_{i=1}^{7} C_{\mathrm{th},i}}, \qquad (5a)$$

$$\tilde{\epsilon}_{\mathrm{s}}(k) = \frac{\sum_{i=8}^{9} C_{\mathrm{th},i} \cdot \tilde{\epsilon}_i(k)}{\sum_{i=8}^{9} C_{\mathrm{th},i}}. \qquad (5b)$$

The estimators predict the model error one time step at a time, i.e., $N_p$ separate predictions will be made to calculate $\tilde{\epsilon}_i(n|k)$ over the horizon $n = 0, \ldots, N_p - 1$ at each time step k. The notation $a(n|k)$ refers to the value of $a(k + n)$ as predicted at time step k, and will be used from here on.

The first step to training a regression model is feature selection. The target variable (i.e. labels) of the regression model are the observed model errors. These can be calculated as the difference between measured and predicted state, i.e.

$$\epsilon(k) = x(k + 1) - x(1|k). \qquad (6)$$

Generally, this difference will also include prediction errors of the disturbances and control inputs: Both the disturbance $d(o|k)$ predicted and input $u(o|k)$ derived for the current time step k by the MPC will differ from the actual values $d(k)$ and $u(k)$ realized through the building (or digital twin). This may be unwanted, as prediction errors of the inputs are generally dynamic in nature, i.e.

$$u(k) - u(0|k) = f\left(u(0|k), x(k)\right) \qquad (7)$$

which is a type of error which is not aimed to remedy with the invention. To solve this, a static time-variant error $\epsilon(k)$ can be retrieved by recalculating $x(1|k)$ using the state space model and measurements $u(k)$ and known disturbances $d(k)$. When selecting the features of the regressors, i.e. their input values, the method considers easy (re)trainability and employability. This means that only such features should be used, which are readily available as historical measurements offline and are also both measurable and predictable online. Hence, the invention considers all (non-constant) disturbances of the aggregator as good candidate features, since by definition, they are both measurable and predictable in the case of the proposed EMS. The proposed method estimates errors, which are caused by internal heat flows and ambient influences. The internal heat flows are mainly caused through occupant behavior, which is time dependent, seasonal and correlated with the electrical consumption inside the building, which is also a direct cause of internal heating. Therefore, the total building load $P_{\mathrm{dem}}(k)$, the time of day $ToD(k): N \rightarrow [0, 24)$ in h and the day of the year $DoY(k): N \rightarrow \{1, \ldots, 365\}$ are chosen as features. Ambient influences are directly dependent on the ambient temperature $\vartheta_{\mathrm{air}}(k)$, yielding another feature, but are also time-dependent (e. g. warm/cold air drawn in by the HVAC system). Furthermore, ambient influences may propagate through the building through heat diffusion, hence the disclosure additionally considers past values of the ambient temperature $\vartheta_{\mathrm{air}}(k - 1)$, $\vartheta_{\mathrm{air}}(k - 2)$. The full set of features the disclosure considers is thus $P_{\mathrm{dem}}(k)$, $\vartheta_{\mathrm{air}}(k)$, $\vartheta_{\mathrm{air}}(k - 1)$, $\vartheta_{\mathrm{air}}(k - 2)$, $ToD(k)$, $DoY(k)$.

The proposed method uses the digital twin model described above to generate the training data for training the estimators. By applying the control approach presented below to the digital twin in a SiL setup, a full calendar year is simulated. Here, no compensation was applied, i. e. $\tilde{\epsilon}_i(k) = 0$. Since all $\tilde{\epsilon}_i(k) = 0$, this is equivalent to omitting the negotiation in the controller and having the distributor always follow the proposed budget of the aggregator. The MPC controller may be implemented in Python. The digital twin model is exported as a functional mock-up unit(FMU) and connected to the controller using the fmpy package. Alternatively, Matlab using the PARODIS framework, which is described in detail in [6] could be used to implement the MPC controller. In the SiL setup, it is linked to a Python bridge, which communicates with the digital twin, running in SimulationX, through a functional mock-up unit (FMU). At each time step k, the controller receives the updated state from the digital twin model, determines the control input u(o|k) and applies it to the digital twin. For the SiL simulation, real measurement data collected is used in both the digital twin and the MPC. Since only the intrinsic model error shall be assessed, the MPC uses perfect predictions for PV power, the building's load and ambient air temperature. To evaluate the impact of actual predictions on the facility discussed with respect to the inventive method, reference is made to [7] and [8]. Both the states and inputs predicted by the MPC are collected as well as the resulting states and inputs in the digital twin. From these, the model error ε(k) for training is calculated as described initially. In a real world setting, one could use historical measurement data that can be mapped to the states, inputs and disturbances of the state-space models, to perform an a posteriori simulation using the state-space model, to calculate or approximate the model error.

Reference document [2] proposed a linear regression model and an XGBoost regressor as candidate estimator models. XGBoost (eXtreme Gradient Boosting) is an open-source software library that implements gradient boosted decision trees efficiently and effectively. Gradient tree boosting is a technique for regression and classification tasks, which makes use of ensembles of decision trees. To train the estimators, for example, a 70/30 train-test split is applied on the training data, and scikit-learn is used to train the regressors.

The proposed two-layer hierarchical control approach will now be described. For each of the two layers, the aggregator and energy distributor (distributor), a control problem is formulated. The control problem of the aggregator decides on aggregated electrical and thermal operation of the building. The distributor's problem solves the optimal distribution of the aggregated thermal budgets. Due to the aggregation of the thermal part of the building in the aggregator, information asymmetry is present in the hierarchy. The aggregator is only partially aware of heat disturbances acting on individual zones, leading to suboptimal thermal budgets being allocated. To solve this, a negotiation between the layers is used, where the distributor can propose an adjusted budget by requesting for an addition energy budget. All parameters of the equations presented in the following sections are listed in table 3 shown above.

The aggregator plans the operation of the overall building. The goal is to regulate the building temperatures while minimizing the monetary costs. This is expressed as a weighted sum of multiple cost functions. Objectives: the building temperatures are controlled by two cost functions. The first one keeps the temperature of the building zone comfortable by minimizing the deviation from 22°C, i.e.,

$$J_{\text{comf,agg}}(k) = \sum_{n=1}^{N_{\text{p}}} \left( \vartheta_{\text{b}}(n|k) - 22°\text{C} \right)^2. \qquad (8)$$

Secondly, the server zone temperature is to be kept within a safe range by

$$J_{\text{s,agg}}(k) = \sum_{n=1}^{N_{\text{p}}} \max \left( 15°\text{C} - \vartheta_{\text{s}}(n|k), 0 \right) \\ + \max \left( \vartheta_{\text{s}}(n|k) - 21°\text{C}, 0 \right). \qquad (9)$$

The monetary costs consist of the costs for gas used in the CHP and for heating, i.e.

$$\ell_{\text{mon,chp}}(k) = c_{\text{gas}} \cdot \frac{1}{\eta_{\text{chp}}} \left( 1 + \frac{1}{c_{\text{cur}}} \right) \cdot T_{\text{s}} \cdot P_{\text{chp}}(k), (10)$$

$$\ell_{\text{mon,heat}}(k) = c_{\text{gas}} \cdot \frac{1}{\eta_{\text{rad}}} \cdot T_{\text{s}} \cdot \dot{Q}_{\text{rad}}(k), \qquad (11)$$

as well as the electricity costs for buying or selling energy to/from the public grid,

$$\ell_{\text{mon,grid}}(k) = \left( c_{\text{buy}}^{\text{grid}} \cdot \max \left( 0, P_{\text{grid}}(k) \right) \qquad (12) \\ - c_{\text{sell}}^{\text{grid}} \cdot \max \left( 0, -P_{\text{grid}}(k) \right) \right) \cdot T_{\text{s}},$$

which are summed to the stage costs

$$\ell_{\mathrm{mon}}(k) = \ell_{\mathrm{mon,grid}}(k) + \ell_{\mathrm{mon,chp}}(k) + \ell_{\mathrm{mon,heat}}(k). \quad (13)$$

Furthermore, costs on the peak power demand of the calendar year may be considered through

$$J_{\mathrm{peak}}(k) = c_{\mathrm{peak}}^{\mathrm{grid}} \cdot \max(0, \max_{n} (P_{\mathrm{grid}}(n|k) - P_{\mathrm{grid,peak}}(k))),$$
$$(14)$$

where $P_{\mathrm{grid,peak}}(k)$ is the peak incurred until time step k. The total monetary cost function is then given by

$$J_{\mathrm{mon}}(k) = J_{\mathrm{peak}}(k) + \sum_{n=0}^{N_{\mathrm{p}}-1} \ell_{\mathrm{mon}}(n|k). \quad (15)$$

While the max terms in the previous equations would in general lead to a nonlinear optimization problem, it is possible to reformulate them into linear expressions using epigraph reformulations [9]. Concerning the constraints, the input constraints of the aggregator are given by

$$-P_{\mathrm{grid,max}} \leq P_{\mathrm{grid}}(k) \leq P_{\mathrm{grid,max}}, \quad (16a)$$

$$0 \leq P_{\mathrm{chp}}(k) \leq P_{\mathrm{chp,max}}, \quad (16b)$$

$$0 \leq \dot{Q}_{\mathrm{rad}}(k) \leq \dot{Q}_{\mathrm{rad,max}}, \quad (16c)$$

$$\dot{Q}_{\mathrm{cool,b,max}} \leq \dot{Q}_{\mathrm{cool,b}}(k) \leq 0, \quad (16d)$$

$$\dot{Q}_{\mathrm{cool,s,max}} \leq \dot{Q}_{\mathrm{cool,s}}(k) \leq 0. \quad (16e)$$

The state constraints are given by

$$0.15 \cdot C_{\mathrm{bat}} \leq E(k) \leq 0.85 \cdot C_{\mathrm{bat}}, \quad (17a)$$

$$P_{\mathrm{charge,max}} \leq \frac{E(k+1) - E(k)}{T_{\mathrm{s}}} \leq P_{\mathrm{charge,max}}. \quad (17b)$$

Concerning the Optimal Control Problem (OCP), together, the aggregator's OCP is described by

$$\min_{\boldsymbol{u}_{\mathrm{agg}}} w_{\mathrm{comf}} \cdot J_{\mathrm{comf,agg}}(k) + w_{\mathrm{s,agg}} \cdot J_{\mathrm{s,agg}}(k)$$
$$+ w_{\mathrm{mon}} \cdot J_{\mathrm{mon}}(k), \quad (18a)$$

$$\mathrm{s.\,t.} \ (2), (16) \ \forall n = 0 \ldots N_{\mathrm{p}} - 1, \quad (18b)$$

$$(17) \ \forall n = 1 \ldots N_{\mathrm{p}}, \quad (18c)$$

with $u_{\mathrm{agg}} = (u_{\mathrm{agg}}(o|k), \ldots, u_{\mathrm{agg}}(N_{\mathrm{p}} - 1|k))$ being the sequence of control inputs. The disclosure considers a prediction horizon of $N_{\mathrm{p}} = 48$ steps of $T_{\mathrm{s}} = 0.5$ h each, i.e., 1 day in total. The time step notation (k) and (k + 1) in (2), (16) and (17) are to be read as (n|k) and (n + 1|k), respectively. For the weights the disclosure chooses $w_{comf}$ = 0.8, $w_{s,agg}$ = 1, $w_{mon}$ = 0.2 as a reasonable compromise according to reference document [10]. Alternatively, multi-objective optimization could be used to dynamically determine these weights as discussed in reference documents [9] and [11], since the aggregator's OCP is always solvable quickly enough due to the hierarchization. Note that in the actual implementation, additional slack variables are necessary for the epigraph reformulations of the max-terms.

The distributor manages the optimal distribution of the thermal budgets of the HVAC system across the individual nine temperature zones.

Concerning the objectives, the first goal of the distributor is to keep the occupant zones 1-7 at a comfortable temperature. This is ensured by minimizing the weighted deviation of the individual zone temperatures from the reference temperature $\vartheta_b(n|k)$ proposed by the aggregator, which is encoded by

$$J_{\mathrm{comf,dis}}(k) = \sum_{n=1}^{N_{\mathrm{p}}} \sum_{i=1}^{7} w_{\mathrm{b},i} \cdot (\vartheta_i(n|k) - \vartheta_{\mathrm{b}}(n|k))^2, \quad (19)$$

where $w_{b,i}$ are the relative weights of the temperature zones, i.e.,

$$w_{\mathrm{b},i} = \frac{C_{\mathrm{th},i}}{\sum_{j=1}^{7} C_{\mathrm{th},j}} \ \forall i = 1, \ldots, 7. \quad (20)$$

The second goal of the distributor is, analogously to the objective in the aggregator, to keep the temperatures of server zones eight and nine within a safe range, i.e.

$$J_{\mathrm{s,dis}}(k) = \sum_{n=1}^{N_{\mathrm{p}}} \sum_{i=8}^{9} w_{\mathrm{s},i} \Big( \max\left(15°\mathrm{C} - \vartheta_i(n|k), 0\right) + \max\left(\vartheta_i(n|k) - 21°\mathrm{C}, 0\right) \Big), \quad (21)$$

where $w_{s,i}$ are the relative weights of the server zones, i.e.,

$$w_{\mathrm{s},i} = \frac{C_{\mathrm{th},i}}{\sum_{j=8}^{9} C_{\mathrm{th},j}} \ \forall i = 8, 9. \quad (22)$$

Slack variables may be considered to adjust the budget in the distributor during the negotiation, namely $z_{cool,b}$, $z_{cool,s}$, and $z_{heat}$. When these slack variables are active, the disclosure wants to avoid that they take arbitrarily large values. Therefore, an additional cost function is considered

$$J_{\mathrm{slack}}(k) = 10^{-4} \cdot \sum_{n=0}^{N_{\mathrm{p}}-1} z_{\mathrm{heat}}(n|k) - z_{\mathrm{cool,b}}(n|k) - z_{\mathrm{cool,s}}(n|k). \quad (23)$$

Concerning the constraints: the inputs of the distributor are subject to constraints stemming from the structure of the building's HVAC system,

$$0 \le \sum_{i=1}^{7} \dot{Q}_{\mathrm{heat},i}(k) \le \dot{Q}_{\mathrm{heat,max}} \quad (24\mathrm{a})$$

$$0 \le \dot{Q}_{\mathrm{heat},i}(k) \le 894\,\mathrm{kW} \ \forall i \in \{1, \ldots, 7\}, \quad (24\mathrm{b})$$

$$0 \leq \quad \dot{Q}_{\text{heat},i}(k) \quad \leq 0 \qquad \forall i \in \{8,9\}, \qquad (24c)$$

$$\dot{Q}_{\text{cool,b,max}} \leq \sum_{i=1}^{7} \dot{Q}_{\text{cool},i}(k) \leq 0, \qquad (24d)$$

$$-800\,\text{kW} \leq \quad \dot{Q}_{\text{cool},i}(k) \quad \leq 0 \qquad \forall i \in \{1,2,3,4,7\}, \ (24e)$$

$$-330\,\text{kW} \leq \quad \dot{Q}_{\text{cool},i}(k) \quad \leq 0 \qquad \forall i \in \{5,6\}, \qquad (24f)$$

$$-53\,\text{kW} \leq \quad \dot{Q}_{\text{cool},8}(k) \quad \leq 0, \qquad (24g)$$

$$-144\,\text{kW} \leq \quad \dot{Q}_{\text{cool},9}(k) \quad \leq 0, \qquad (24h)$$

where $\dot{Q}_{\text{heat,max}} = \dot{Q}_{\text{rad,max}} + (1\,/c_{\text{cur}})P_{\text{chp,max}}$. Furthermore, the distributor shall follow the heat budget allocated by the aggregator, hence the constraints

$$\sum_{i=1}^{7} \dot{Q}_{\text{heat},i}(k) = \dot{Q}_{\text{heat}}(k) + z_{\text{heat}}(k), \qquad (25a)$$

$$\sum_{i=1}^{7} \dot{Q}_{\text{cool},i}(k) = \dot{Q}_{\text{cool,b}}(k) + z_{\text{cool,b}}(k), \qquad (25b)$$

$$\sum_{i=8}^{9} \dot{Q}_{\text{cool},i}(k) = \dot{Q}_{\text{cool,s}}(k) + z_{\text{cool,s}}(k) \qquad (25c)$$

with

$$\dot{Q}_{\text{heat}}(k) = \dot{Q}_{\text{rad}}(k) + \frac{1}{c_{\text{cur}}}P_{\text{chp}}(k) \qquad (26)$$

apply. The aforementioned slack variables can therefore be used to adjust the thermal budgets.

These slack variables are constrained by

$$-M_{\text{slack}} \leq z_{\text{cool,s}}(k) \leq 0, \qquad (27a)$$

$$-M_{\text{slack}} \leq z_{\text{cool,b}}(k) \leq 0, \qquad (27b)$$

$$0 \leq z_{\text{heat}}(k) \leq M_{\text{slack}}. \qquad (27c)$$

During the negotiation, the slack variables are activated and deactivated by varying the value of the parameter $M_{\text{slack}}$.

Concerning the optimal control problem, the distributor's OCP is hence described by

$$\min_{\boldsymbol{u}_{\text{dis}}} J_{\text{comf,dis}}(k) + J_{\text{s,dis}}(k) + J_{\text{slack}}(k) \qquad (28a)$$

$$\text{s. t. } (4), (24), (25), (27) \; \forall n = 0 \ldots N_\mathrm{p} - 1 \quad (28b)$$

with $u_\mathrm{dis} = (u_\mathrm{dis}(o|k), \ldots, u_\mathrm{dis}(N_\mathrm{p} - 1|k))$ being the sequence of control inputs, and the same prediction horizon as in the aggregator. Again, the time step notation (k) and (k + 1) in (4), (24) - (27) are to be read as (n|k) and (n + 1|k), respectively.

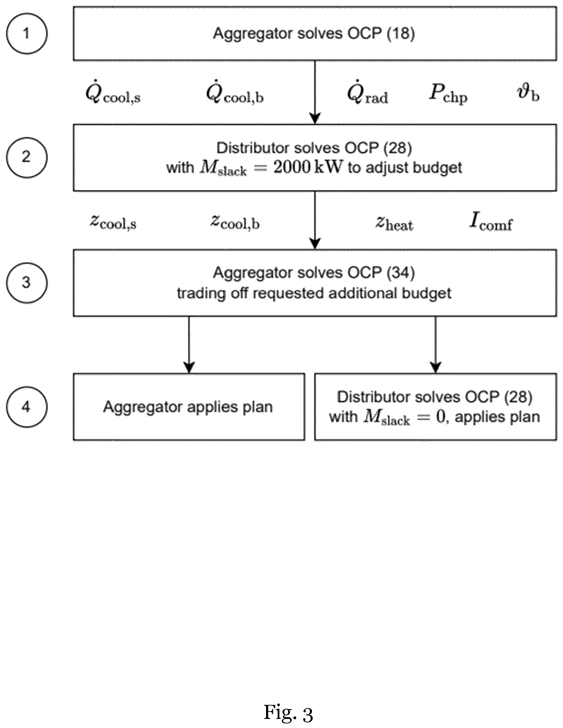

Fig. 3 illustrates in a diagram a negotiation process between the aggregator and the energy distributor representing two layers in the proposed approach. The negotiation process between the aggregator layer and energy distributor layers in the proposed approach allows the distributor to propose an adjusted thermal budget to account for the information mismatch between the layers.

The negotiation process has four steps. In the first step, the aggregator first proposes an initial plan. To do this, the OCP of equation (18) is solved without any adjustments. In the second step, the distributor receives this plan and solves its OCP as defined in equation (28). In this step, the distributor shall be able to freely adjust the aggregator's budget $u_\mathrm{agg,o}$, therefore the budget slack variables are activated by setting $M_\mathrm{slack} = 2000$ kW. Then, the distributor communicates the predicted value of the slack variables $z_\mathrm{cool,b}$, $z_\mathrm{cool,s}$ and $z_\mathrm{heat}$, as well as the expected influence of the individual residual errors on temperature tracking performance $I_\mathrm{comf}$ to the aggregator. In the third step, the aggregator receives these values and solves a modified OCP, where it can trade off the requested budget against the expected influence of the individual residual errors on the zone temperature trajectories. This is motivated by the assumption that the mismatch in information that leads to insufficient budget allocation is caused directly by the residual model errors.

To perform this tradeoff, an additional decision variable p(n|k) is added to the aggregator's OCP, together with the constraints

$$\dot{Q}_\mathrm{cool,b}(n|k) = \dot{Q}_\mathrm{cool,b,0}(n|k) + p(n|k) \cdot z_\mathrm{cool,b}(n|k) \quad (29a)$$

$$\dot{Q}_\mathrm{cool,s}(n|k) = \dot{Q}_\mathrm{cool,s,0}(n|k) + z_\mathrm{cool,s}(n|k) \quad (29b)$$

$$\dot{Q}_\mathrm{heat}(n|k) = \dot{Q}_\mathrm{heat,0}(n|k) + p(n|k) \cdot z_\mathrm{heat}(n|k) \quad (29c)$$

which apply $\forall n = 0, \ldots, N_\mathrm{p} - 1$. The index o on the right hand side of the constraints refers to the trajectories planned in the first step of the negotiation. The variable p(n|k) controls what fraction of the budget requested by the distributor is actually allotted, so

$$0 \le p(n|k) \le 1. \quad (30)$$

Note that the server zones' thermal budget request is always granted, as it is used to avoid soft-constraint violations. Increasing the thermal budgets increases monetary costs. Therefore, this additional cost is traded off against the gain in tracking performance in the distributor. This is achieved with the compensation cost function

$$J_\mathrm{comp}(k) = \sum_{n=0}^{N_\mathrm{p}-1} (1 - p(n|k)) \cdot \sum_{j=n+1}^{N_\mathrm{p}} I_\mathrm{comf}(n, j). \quad (31)$$

Here, $I_\mathrm{comf}(n, j)$ effectively approximates the weighted deviation of the individual zones from the reference trajectory $\vartheta_\mathrm{b,o}$ expected if the error $\varepsilon_i$ is not compensated once it occurs, i.e.,

$$I_\mathrm{comf}(n, j) = \sum_{i=1}^{7} w_\mathrm{b,i} \cdot \left( (\vartheta_i(j|k) + \tilde{\varepsilon}_\mathrm{res,i}(n, j) - \vartheta_\mathrm{b,0}(j|k))^2 \right.$$
$$\left. - (\vartheta_i(j|k) - \vartheta_\mathrm{b,0}(j|k))^2 \right). \quad (32)$$

Here, $\tilde{\varepsilon}_\mathrm{res}(n, j)$ is the residual influence of $\tilde{\varepsilon}_\mathrm{dis}(n|k)$ expected at (n + j + 1|k), assuming that an uncompensated error decays with the passive dynamics of the building, i.e.,

$$\tilde{\epsilon}_{\mathrm{res}}(n, j) = A_{\mathrm{dis}}^{j-n-1}\tilde{\epsilon}_{\mathrm{dis}}(n|k). \qquad (33)$$

The motivation for this compensation function is that an uncompensated error $\epsilon_i(n|k)$ will propagate along the horizon and add onto other errors until it eventually decays, hence an uncompensated error will also create costs after its initial occurrence. The described method approximates this by assuming that errors are independent and the temperature influences add and can be compensated linearly. This avoids multiplications of the decision variables $p(n \mid k)$ with themselves, which would make the OCP highly nonlinear. In summary, in this third step, the aggregator solves the modified OCP

$$\min_{\boldsymbol{u}_{\mathrm{agg}}} w_{\mathrm{comf}} \cdot J_{\mathrm{comf,agg}}(k) + w_{\mathrm{s,agg}} \cdot J_{\mathrm{s,agg}}(k)$$
$$+ w_{\mathrm{mon}} \cdot J_{\mathrm{mon}}(k) + w_{\mathrm{comp}} \cdot J_{\mathrm{comp}}(k) \qquad (34a)$$

$$\mathrm{s.\,t.}\ (2),\ (16),\ (29),\ (30)\ \forall\, n = 0 \ldots N_{\mathrm{p}} - 1, \qquad (34b)$$

$$(17)\ \forall\, n = 1 \ldots N_{\mathrm{p}}. \qquad (34c)$$

To heat or cool the entire building by 1 K, the heating or cooling must run at full power for approximately 1.25 h.

Additional budget needs are caused by positive and negative heat flows canceling in the overall error, meaning that one half of the building encounters a heating disturbance, the other half of the building a cooling disturbance. Hence, 1 K in weighted absolute deviation occurs when half the building would need to be cooled fully, while the other half would need to be heated by the same amount, meaning a total heat power of

$$\dot{Q}_{\mathrm{max}} = 0.5 \cdot \dot{Q}_{\mathrm{cool,max}} + 0.5 \cdot \dot{Q}_{\mathrm{heat,max}} \qquad (35)$$

must be applied for approx. 2 time steps to compensate the disturbance. Thus, the disclosure makes the assumption that $(1\,\mathrm{K})^2$ of weighted squared deviation from the reference trajectory is equivalent to the maximum possible costs incurred by increasing the budget accordingly, i.e.

$$(1\,\mathrm{K})^2 \mathrel{\hat{=}} T_{\mathrm{s}} \cdot \left( c_{\mathrm{buy}}^{\mathrm{grid}} \cdot \dot{Q}_{\mathrm{cool,max}} + c_{\mathrm{gas}} \cdot \dot{Q}_{\mathrm{heat,max}} \right). \qquad (36)$$

which is used to calibrate the weight $w_{\mathrm{comp}}$ conservatively, i.e.,

$$w_{\mathrm{comp}} = w_{\mathrm{mon}} \frac{T_{\mathrm{s}}}{(1\,\mathrm{K})^2} \left( c_{\mathrm{buy}}^{\mathrm{grid}} \dot{Q}_{\mathrm{cool,max}} + c_{\mathrm{gas}} \dot{Q}_{\mathrm{heat,max}} \right). \qquad (37)$$

In general, the choice of this weight is arbitrary and should be made such that a good compromise between budget increase and tracking error is achieved. The weight can be set in advance. The new plan resulting from this step is final and applied by the aggregator and distributor, i.e., the distributor distributes the newly allocated budgets by resolving its OCP with $M_{\mathrm{slack}} = 0$. In the next time step, the described negotiation process is repeated.

To evaluate the proposed approach, the disclosure applies it in a SiL simulation as described above. The disclosure compares the proposed approach to two comparison scenarios, simulated analogously:

1. Baseline: a reduced hierarchical control approach, without error compensation, i.e., $\tilde{\epsilon}\,(k) = 0$, and without negotiation. This is equivalent to only solving the aggregator's OCP (18) and then having the distributor distribute the unadjusted plan by solving (28) with $M_{\mathrm{slack}} = 0$, i.e., executing only steps 1 and 4 of the negotiation process shown in figure 3.
2. Compensation: the same as baseline, but with active error compensation, i.e., $\tilde{\epsilon}\,(k) \neq 0$.

The disclosure conducted all simulations on an Intel Xeon E3-1280 v6 CPU using Gurobi as the solver.

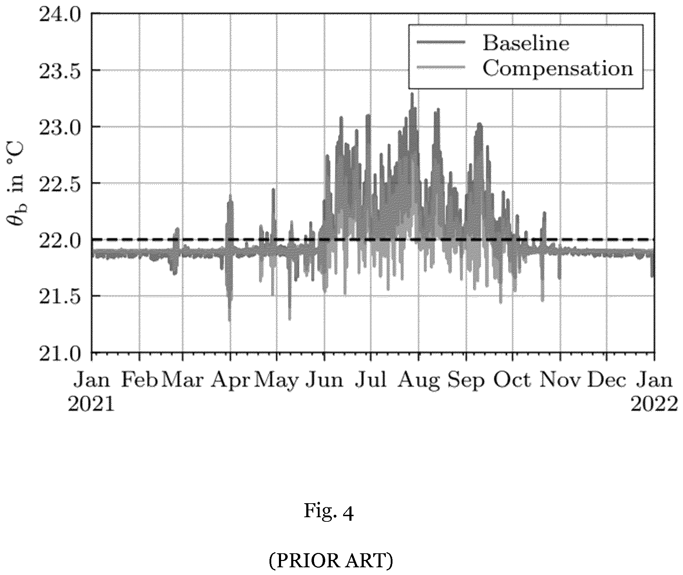

Fig. 4 shows the resulting building zone temperature $\vartheta_{\mathrm{b}}$ for those scenarios. This shows that active error compensation reduces overall temperature control performance, as $\vartheta_{\mathrm{b}}$ is significantly closer to the desired 22°C during summer in the compensation scenario. Fig. 4 shows a comparison of the building zone temperature $\vartheta_{\mathrm{b}}$ between a

simulation without and with error compensation, both without negotiation between the layers including the aggregator and the energy distributor as known from prior art.

The building zone temperature $\vartheta_b$ of the simulation without error compensation is shown as "Baseline", in dark grey. The building zone temperature $\vartheta_b$ from the simulation with error compensation is referenced in light grey, denoted with "Compensation". Both, building zone temperature $\vartheta_b$ of the simulation without error compensation and the building zone temperature $\vartheta_b$ from the simulation with error compensation, are each simulated without negotiation between the layers.

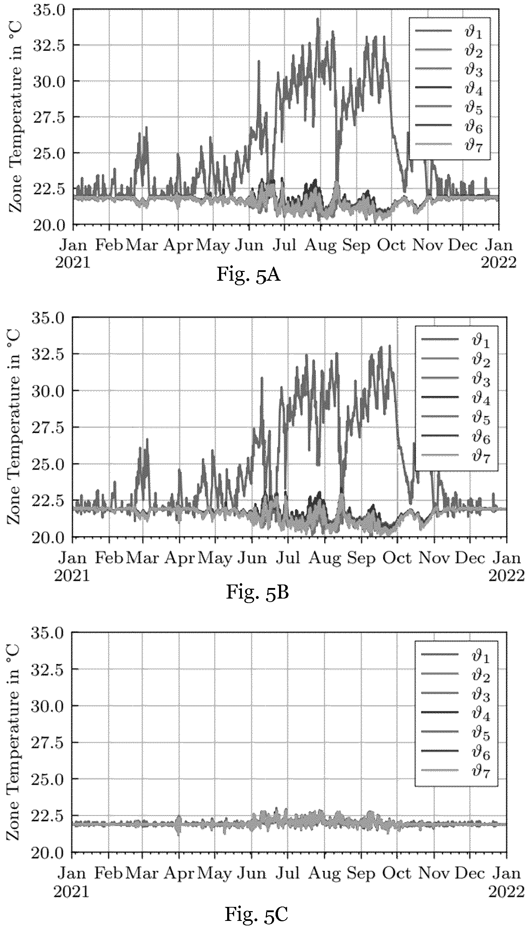

The temperatures $\theta_i$ of the individual building temperature zones of zones i, with i ranging from 1 to 7, are shown in figs. 5A, 5B, and 5C.

Fig. 5A shows temperatures $\theta_i$ of the individual building temperature zones of zones i, i= 1, .., 7, without error compensation and without negotiation.

Fig. 5B shows temperatures $\theta_i$ of the individual building temperature zones of zones i, i= 1, .., 7, with error compensation and without negotiation.

Fig. 5C shows temperatures $\theta_i$ of the individual building temperature zones of zones i, i= 1, .., 7, with both error compensation and negotiation according to an embodiment.

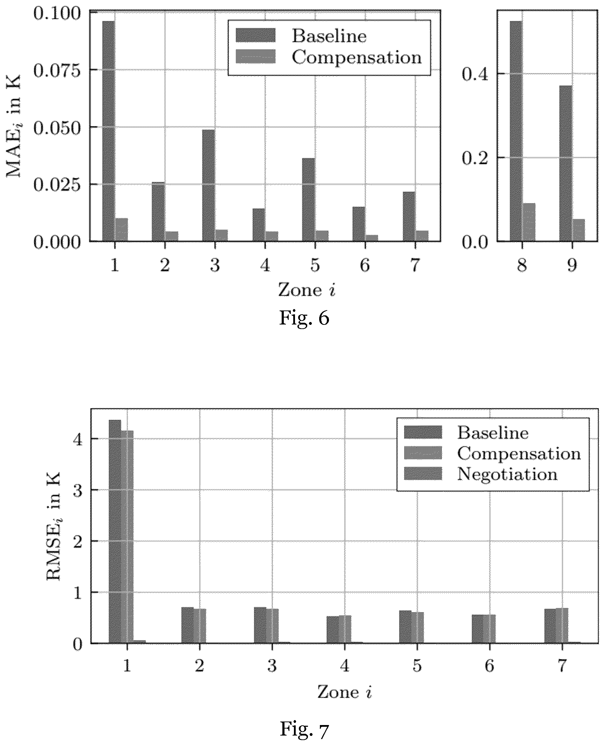

Fig. 5A and Fig. 5B show the individual zone temperatures for the baseline and compensation scenarios, respectively. Comparing the resulting control performance shows only minor improvement in the compensation scenario compared to baseline. Fig. 6 shows the mean absolute residual error for each zone in the two scenarios, i.e.

$$\mathrm{MAE}_i = \frac{1}{N} \sum_{k=0}^{N-1} |\epsilon_i(k)|, \qquad (38)$$

where $\varepsilon_i(k)$ is the left-over model error recorded during the simulations. This shows that the model error is indeed significantly reduced in all zones when error compensation is active. This suggests that the low control performance regarding temperature tracking is not caused by insufficient error compensation, but instead by the information mismatch present between the layers of the hierarchy. This is confirmed when looking at the control performance achieved by the proposed approach with negotiation shown in fig. 5C. Here, the temperature in all zones stays close to 22°C and zone temperatures no longer diverge significantly. This is further illustrated in fig. 7, which shows the root mean square error (RMSE) of the deviation from the reference temperature $\vartheta_b$ in zones 1-7, i.e.

$$\mathrm{RMSE}_i = \sqrt{\frac{1}{N} \sum_{k=1}^{N} (\vartheta_i(k) - \vartheta_b(k))^2}. \qquad (39)$$

In the baseline case, all zones strongly deviate from the reference temperature, while in the compensation scenario the tracking error is only very slightly reduced. With both active compensation and the proposed negotiation however, the tracking error is reduced significantly in all zones. Table 4 further shows the monetary costs, peak grid demand and the weighted RMSE of the tracking error, calculated as

$$\mathrm{RMSE} = \sum_{i=1}^{7} w_{b,i} \cdot \mathrm{RMSE}_i, \qquad (40)$$

**Table 4**

Monetary costs, maximum peak grid demand and weighted root mean square error (RMSE) of the temperature tracking error between aggregator and distributor in all three evaluated scenarios.

| Simulation | Monetary costs in 1000 Euro | $P_{\mathrm{grid,peak}}$ in kW | RMSE in K |
|---|---|---|---|
| Baseline | 366.723 | 630.976 | 1.125 |
| Compensation | 369.939 | 620.023 | 1.012 |
| Negotiation | 383.502 | 620.408 | 0.039 |

for all three evaluated scenarios. Compared to baseline, the tracking error could only be reduced by 10 % with active compensation but without negotiation. The proposed approach with negotiation however incurs only 4.6 % higher monetary costs, while reducing the tracking error by 96.5 %.

Fig. 6 shows a comparison between the mean absolute error (MAE) of the residual model error without error compensation and with error compensation in each temperature zone.

In fig. 6, the MAE of the residual model error without error compensation is denoted by the term "baseline" and the MAE of the residual model error with error compensation is shown referenced with the term "Compensation" in each temperature zone i, i ranging from 1 to 7.

Fig. 7 shows a comparison between a root mean square error (RMSE) of the tracking error between the reference temperature $\vartheta_b$ and individual building zone temperatures $\vartheta_i$ in zones 1-7, without error compensation and without negotiation, with error compensation and without negotiation, and with both error compensation and negotiation.

Fig. 7 displays the RMSE of the tracking error between the reference temperature $\vartheta_b$ and individual building zone temperatures $\vartheta_i$ in zones 1-7, without error compensation and without negotiation as a "Baseline". Fig. 7 displays the RMSE of the tracking error with error compensation and without negotiation denoted by the term "Compensation", and the RMSE of the tracking error with both error compensation and negotiation denoted by the term "Negotiation".

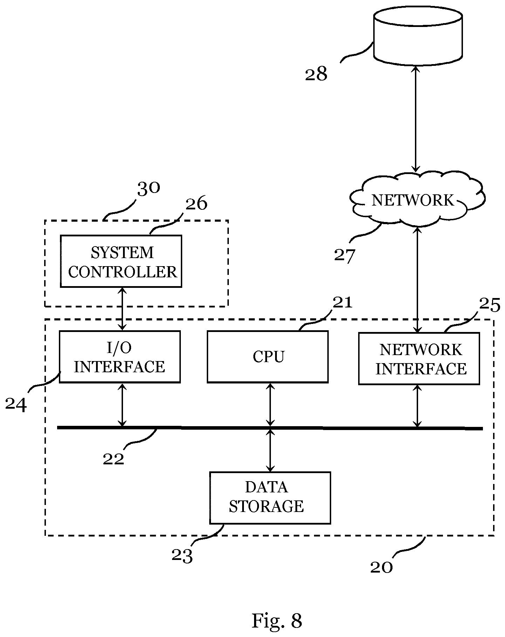

Fig. 8 presents an overview on a high level of abstraction of a hardware architecture of the proposed energy management system 20.

The energy management system 20 of fig. 8 includes a processor 21 (control unit 21), a data storage 23 (memory 23), an input/output interface 24, and a network interface 25, which are linked by a data bus 22.

The input/output interface 24 may in particular provide a capability to communicate with system controller(s) 26 of a building infrastructure system 30. The building infrastructure system 30 may include a plurality of subsystems, e.g., a thermal subsystem (HVAC subsystem), a lighting subsystem, or an EVCS subsystem.

Each subsystem may include at least one controller 26 configured to control actuators of the respective subsystem. The EVCS subsystem may include a charging controller for controlling a charger as actuator of the EVCS subsystem, which charges a battery of an electric vehicle connected to an individual EVCS of the EVCS subsystem. The thermal subsystem may include a HVAC controller configured to control radiators, electric blinds, HVAC devices, ventilators, cooling devices as actuators of the thermal subsystem.

The input/output interface 24 may further represent an interface for connecting input/output devices not shown in fig. 8, including, but not limited to keyboards, mouse, pointing devices, displays microphones, loudspeakers in any combination. The input/output interface 24 may at least in part be implemented in software modules running on the processor 21.

The processor 21 may be any type of controller or processor, and may even be embodied as one or more processors 21 adapted to perform the functionality discussed herein. The processor 21 may include using a single integrated circuit (IC), or may include use of a plurality of integrated circuits or other components connected, arranged or grouped together, such as controllers, microprocessors, digital signal processors (DSP), parallel processors, multiple core processors, custom ICs, application specific integrated circuits (ASIC), field programmable gate arrays (FPGAs), and further include adaptive computing ICs and associated memory, e.g. RAM, DRAM and ROM, and other ICs and components. The term processor 21 should be understood to equivalently mean and include a single IC, or arrangement of custom ICs, ASICs, processors, microprocessors, controllers, FPGAs, adaptive computing ICs, or some other grouping of integrated circuits which perform the functions discussed for the computer-implemented method, with associated memory, such as microprocessor memory or additional RAM, DRAM, SDRAM, SRAM, MRAM, ROM, FLASH, EPROM or E2 PROM. The processor 21 with its associated memory may be adapted or configured via programming, FPGA interconnection, or hard-wiring to perform the methodology of the computer-implemented method. For example, the method may be programmed and stored, in the processor 21 with its associated memory or memory 23, and other equivalent components, as a set of program instructions or other code for subsequent execution when the processor 21 is operative, e.g. powered on and functioning.

The processor 21 is programmed, using software and data structures of the disclosed computer-implemented method, for example, to perform the methodology of the present disclosure. Consequentially, the system and the computer-implemented method of the present invention may be embodied as software, which provides such programming or other instructions, such as a set of instructions and/or metadata embodied within a computer readable medium, discussed above. In addition, metadata may also be utilized to define the various data structures of a look up table or a database. Such software may be in the form of source or object code, by way of example and without limitation. Source code further may be compiled into some form of instructions or object code (including assembly language instructions or configuration information). The software, source code or metadata of the present invention may be embodied as any type of code, such as C, C++, SystemC, LISA, XML, Java, Brew, SQL and its variations (e.g., SQL 99 or proprietary versions of SQL), DB2, Oracle, or any other type of programming language which performs the functionality discussed herein, including various hardware definition or hardware modeling languages (e.g., Verilog, VHDL, RTL) and resulting database files (e.g., GDSII). As a consequence, a "construct", "program construct", "software construct" or "software", as used equivalently herein, means and refers to any programming language, of any kind, with any syntax or signatures, which provides or can be interpreted to provide the associated functionality or methodology specified (when instantiated or loaded into a processor or computer and executed, including the processor 25, for example).

The software, metadata, or other source code of the present invention and any resulting bit file (object code, database, or look up table) may be embodied within any tangible storage medium, such as any of the computer or other machine-readable data storage media, as computer-readable instructions, data structures, program modules or other data, such as discussed above with respect to the memory 23, e.g., a floppy disk, a CDROM, a CD-RW, a DVD, a magnetic hard drive, an optical drive, or any other type of data storage apparatus or medium, as mentioned above.

The memory 23, which may include a data repository or database, may be embodied in any form, including within any computer or other machine-readable data storage medium, memory device or other storage or communication device for storage or communication of information, including, but not limited to, a memory integrated circuit (IC), or memory portion of an integrated circuit (such as the resident memory within a or processor 21, whether volatile or non-volatile, whether removable or non-removable, including without limitation RAM, FLASH, DRAM, SDRAM, SRAM, MRAM, FeRAM, ROM, EPROM or E2 PROM, or any other form of memory device, such as a magnetic hard drive, an optical drive, a magnetic disk or tape drive, a hard disk drive, other machine-readable storage or memory media such as a floppy disk, a CDROM, a CD-RW, digital versatile disk (DVD) or other optical memory, or any other type of memory, storage medium, or data storage apparatus or circuit, know. In addition, such computer readable media includes any form of communication media which embodies computer readable instructions, data structures, program modules or other data in a data signal or modulated signal, such as an electromagnetic or optical carrier wave or other transport mechanism, including any information delivery media, which may encode data or other information in a signal, wired or wirelessly, including electromagnetic, optical, acoustic, RF or infrared signals, and so on. The memory 23 may be adapted to store various look up tables, parameters, coefficients, other information and data, programs or instructions of the software of the present disclosure, and other types of tables such as database tables.

The network interface 25 provides the system 20 with the capability to link to external databases and servers 28 via a communication network 27. The network interface 25 in particular enables to implement the system 20 in a spatially distributed manner by performing at least some of the individual method steps at least in part remote from the system 20, e.g. on one or a plurality of servers 28.

All steps which are performed by the various entities described in the present disclosure as well as the functionalities described to be performed by the various entities are intended to mean that the respective entity is adapted to or configured to perform the respective steps and functionalities.

**Reference documents:**

[1] J. Engel, T. Schmitt, T. Rodemann, J. Adamy, Hierarchical economic model predictive control approach for a building energy management system with scenario-driven EV charging, IEEE Transactions on Smart Grid (2022) 3082-3093doi:10.1109/TSG. 2022.3160390.

[2] T. Schmitt, J. Engel, T. Rodemann, Regression-based model error compensation for hierarchical MPC building energy management system, in: 2023 IEEE Conference on Control Technology and Applications (CCTA), IEEE, 2023. doi:10.1109/ CCTA54093.2023.10252861. URL https://arxiv.org/abs/2306.09080

[3] M. Stadie, T. Rodemann, A. Burger, F. Jomrich, S. Limmer, S. Rebhan, H. Saeki, V2B vehicle to building charging manager, in: EVTeC: 5th International Electric Vehicle Technology Conference 2021, Japanese Society of Automotive Engineers, 2021.

[4] T. Schmitt, Multi-objective building energy management optimization with model predictive control, Ph.D. thesis, Technische Universit" at Darmstadt, Darmstadt (2022). doi: https: //doi.org/10.26083/tuprints-00022344. URL http:// tuprints.ulb.tu-darmstadt.de/22344/

[5] A. Castellani, S. Schmitt, S. Squartini, Real-world anomaly detection by using digital twin systems and weakly supervised learning, IEEE Transactions on Industrial Informatics 17 (7) (2021) 4733-4742. doi:10.1109/tii.2020.3019788.

[6] T. Schmitt, J. Engel, M. Hoffmann, T. Rodemann, PARODIS: One MPC framework to control them all. Almost., in: 2021 IEEE Conference on Control Technology and Applications (CCTA), 2021, pp. 466-471. doi:10.1109/CCTA48906.2021.9658821.

[7] C. Wang, T. Bäck, H. H. Hoos, M. Baratchi, S. Limmer, M. Olhofer, Automated machine learning for short-term electric load forecasting, in: 2019 IEEE Symposium Series on Computational Intelligence (SSCI), 2019, pp. 314-321. doi: 10.1109/SSCI44817.2019.9002839.

[8] T. Schmitt, T. Rodemann, J. Adamy, The cost of photovoltaic forecasting errors in microgrid control with peak pricing, Energies 14 (9) (2021). doi:10.3390/en14O92569. URL https://www.mdpi.com/1996-1073/14/9/2569

[9] T. Schmitt, T. Rodemann, J. Adamy, Multi-objective model predictive control for microgrids, at - Automatisierungstechnik 68 (8) (2020) 687-702. doi:10.1515/auto-2020-0031. URL https://www.honda-ri.de/pubs/pdf/4361.pdf

[10] T. Schmitt, J. Engel, T. Rodemann, J. Adamy, Application of Pareto optimization in an economic model predictive controlled microgrid, in: 2020 28th Mediterranean Conference on Control and Automation (MED), IEEE, 2020, pp. 868-874. doi:10. 1109/MED48518.2020.9182878. URL https://www.honda-ri.de/pubs/pdf/4341.pdf

[11] T. Schmitt, M. Hoffmann, T. Rodemann, J. Adamy, Incorporating human preferences in decision making for dynamic multiobjective optimization in Model Predictive Control, Inventions 7 (3) (2022). doi:10.3390/inventions7030046.

## Claims

1. Computer-implemented method for an energy management system (20) comprising at least one subsystem, the method comprises:

   determining (S1), by an aggregator module based on aggregated information for the energy management system (20), an energy budget and at least one setpoint for each subsystem;
   determining (S2), by at least one energy distributor module associated with each subsystem based on specific information for the associated subsystem, a desired additional energy budget based on the respective determined energy budget and the at least one setpoint, wherein each subsystem is associated with an individual energy distributor module; and
   predicting (S3), by each energy distributor module, a performance loss of each subsystem for a case that the aggregator module does not grant the respective desired additional energy budget, based on the energy budget compared to a sum of the energy budget and the desired additional energy budget for the at least one setpoint;
   communicating (S4), by each energy distributor module, the desired additional energy budget and performance loss to the aggregator module;
   determining (S5), by the aggregator module, a granted additional energy budget for each subsystem based on the desired additional energy budget and the predicted performance loss for each subsystem;
   generating (S6), by the aggregator module, an energy budget plan based on the determined granted additional energy budget for each subsystem; and
   controlling (S7) the energy management system (20) based on the energy budget plan for each subsystem.

2. Computer-implemented method according to claim 1, wherein the method includes
   determining (S1), by the aggregator module, the energy budget and the at least one setpoint for each subsystem by optimizing a metric calculated based on at least one of aggregated monetary cost, temperature setpoints, and charge satisfaction levels for the energy management system (20).

3. Computer-implemented method according to claim 1 or 2, wherein the method includes

   estimating aggregated thermal disturbances acting on a building based on a model trained via machine learning using training data in a training phase; and
   determining (S1), by the aggregator module, the energy budget and the at least one setpoint for each subsystem further based on the aggregated thermal disturbances.

4. Computer-implemented method according to any one of the preceding claims, wherein the method includes
   in the step of determining (S1), by the aggregator module, the energy budget and the at least one setpoint for each subsystem, converting electric energy to thermal energy, or converting thermal energy to electric energy.

5. Computer-implemented method according to any one of the preceding claims, wherein the method includes

determining (S1), by the aggregator module, the energy budget and the at least one setpoint for each subsystem by solving an optimal control problem, in particular, an optimal control problem for multiple cost functions according to

$$\min \sum_k w_{costs} J_{costs}(k) + w_{comf} J_{comf}(k) + w_{sat} J_{sat}(k)$$

with discrete time step k, weights $w_{costs}$, $w_{comf}$, and $w_{sat}$ for the cost functions, and the cost functions $J_{costs}$ for monetary cost, $J_{comf}$, for thermal comfort cost, and $J_{sat}$, for satisfaction cost.

6. Computer-implemented method according to any one of the preceding claims, wherein the method includes determining (S5), by the aggregator module, the granted additional energy budgets as a fraction n of the respective desired additional energy budget of each subsystem, wherein the fraction n is equal to or larger than 0 and smaller than or equal to 1.

7. Computer-implemented method according to any one of the preceding claims, wherein the method includes determining (S5), by each energy distributor module, the desired additional energy budget for each subsystem to achieve the at least one setpoint of the subsystem or to achieve an optimal control behavior of the subsystem.

8. Computer-implemented method according to any one of the preceding claims, wherein

the at least one energy distributor module includes at least one thermal energy distributor module that controls a thermal behavior of individual thermal zones of a building by distributing a thermal energy budget and determining an intended additional thermal energy budget based on solving a control problem, and
solving the control problem includes minimizing a sum of weighted squared temperature deviations from a temperature setpoint for the individual thermal zones.

9. Computer-implemented method according to claim 8, wherein
the at least one thermal energy distributor module solves the control problem including estimated thermal disturbances of the individual thermal zones.

10. Computer-implemented method according to claim 9, wherein
the at least one thermal energy distributor module estimates the thermal disturbances based on a model trained via machine learning on training data in a training phase.

11. Computer-implemented method according to any one of claims 9 to 10, wherein
the at least one thermal energy distributor module predicts the performance loss by calculating an estimated comfort loss for the individual thermal zones.

12. Computer-implemented method according to claim 11, wherein

the at least one thermal energy distributor module calculates the estimated comfort loss based on the intended additional thermal energy budget compensating the estimated thermal disturbances of the individual thermal zones; or
the at least one thermal energy distributor module calculates the estimated comfort loss based on simulating with a predetermined model an influence of the uncompensated estimated thermal disturbances of the individual thermal zones.

13. Computer-implemented method according to claim 12, wherein
the at least one thermal energy distributor module uses the predetermined model for calculating the estimated comfort loss and further for solving the control problem including estimated thermal disturbances on the individual thermal zones.

14. Computer-implemented method according to any one of the preceding claims, wherein

the at least one energy distributor module includes at least one electric vehicle charging station energy distributor that controls charging processes at individual electric vehicle charging stations by distributing an electric charging energy budget and determining an intended additional charging energy budget based on solving a control problem; and

solving the control problem includes maximizing a sum of a charging satisfaction measure for the individual electric vehicle charging stations that are connected with electric vehicles.

15. Computer-implemented method according to claim 14, wherein
the at least one electric vehicle charging station energy distributor determines charging losses of the connected electric vehicles using a predetermined model trained via machine learning on training data in a training phase.

16. Computer-implemented method according to claim 14 or 15, wherein
the at least one electric vehicle charging station energy distributor predicts the performance loss of an electric vehicle charging station subsystem by estimating a charging satisfaction loss for the individual electric vehicle charging stations.

17. Computer-implemented method according to any one of the preceding claims, wherein
the aggregator module determines the granted additional energy budget for each subsystem based on the desired additional energy budget and the predicted performance loss for each subsystem by solving an optimal control problem for multiple cost functions according to

$$\min \sum_k w_{costs} J_{costs}(k) + w_{comf}\left(J_{comf}(k) + \left(1 - p_1(k)\right) \cdot I_{comf}(k)\right)$$
$$+ w_{sat}\left(J_{sat}(k) + \left(1 - p_2(k)\right) \cdot I_{sat}(k)\right)$$

with discrete time step k, weights $w_{costs}$, $w_{comf}$, and $w_{sat}$ for the cost functions, the cost functions $J_{costs}$ for monetary cost, $J_{comf}$, for thermal comfort cost, and $J_{sat}$, charging satisfaction cost, and a parameter $p_i(k)$ denoting the fraction of granted intended additional energy budget of energy distributors i, i =1, 2.

18. Energy management system including at least one subsystem, the system comprising:

an aggregator module configured to determine, based on aggregated information for the energy management system, an energy budget and at least one setpoint for each subsystem;
at least one energy distributor module associated with each subsystem and configured to determine based on specific information for the associated subsystem, a desired additional energy budget based on the respective determined energy budget and the at least one setpoint,
wherein each subsystem is associated with an individual energy distributor module, and the at least one energy distributor module is configured to predict a performance loss of the subsystem for a case that the aggregator module does not grant the respective desired additional energy budget, based on the energy budget compared to a sum of the energy budget and the desired additional energy budget for the at least one setpoint;
wherein each distributor module is further configured to communicate the desired additional energy budget and the performance loss to the aggregator module;
the aggregator module is further configured to determine a granted additional energy budget for each subsystem based on the desired additional energy budget and the predicted performance loss for each subsystem, and to generate an energy budget plan based on the determined granted additional energy budget for each subsystem; and
at least one controller of the energy management system is configured to control the energy management system based on the energy budget plan for each subsystem.

DETERMINING ENERGY BUDGET AND AT LEAST ONE SETPOINT FOR EACH SUBSYSTEM — S1

DETERMINING DESIRED ADDITIONAL ENERGY BUDGET FOR EACH SUBSYSTEM — S2

PREDICTING PERFORMANCE LOSS FOR EACH SUBSYSTEM — S3

COMMUNICATING DESIRED ADDITIONAL ENERGY BUDGET AND PREDICTED PERFORMANCE LOSS — S4

DETERMINING GRANTED ADDITIONAL ENERGY BUDGET FOR EACH SUBSYSTEM — S5

GENERATING ENERGY BUDGET PLAN — S6

CONTROLLING BUILDING INFRASTRUCTURE SYSTEM — S7

Fig. 1

Fig. 2

Fig. 3

Fig. 4

(PRIOR ART)

Fig. 5A

Fig. 5B

Fig. 5C

Fig. 6

Fig. 7

Fig. 8

## EUROPEAN SEARCH REPORT

**Application Number**

EP 25 15 4312

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/004171 A1 (PATEL NISHITH R [US] ET AL) 4 January 2018 (2018-01-04) * figure 6 * * paragraphs [0109] - [0112] * | 1-18 | INV. H02J13/00 F24F11/47 G05B13/04 H02J7/34 |
| A | US 2015/198345 A1 (BICKNELL KIRBY NEAL [US]) 16 July 2015 (2015-07-16) * paragraphs [0037] - [0040] * | 1-18 | F24F11/46 G05B15/02 ADD. H02J3/00 |
| A | US 2015/045962 A1 (WENZEL MICHAEL J [US] ET AL) 12 February 2015 (2015-02-12) * figure 1A * * paragraphs [0047] - [0059] * | 1-18 | |
| A | THOMAS SCHMITT ET AL: "Regression-Based Model Error Compensation for Hierarchical MPC Building Energy Management System", ARXIV.ORG, CORNELL UNIVERSITY LIBRARY, 201 OLIN LIBRARY CORNELL UNIVERSITY ITHACA, NY 14853, 15 June 2023 (2023-06-15), XP091539040, * the whole document * | 1-18 | |

**TECHNICAL FIELDS SEARCHED (IPC)**

H02J
F24F
G05B

The present search report has been drawn up for all claims

| Place of search | Date of completion of the search | Examiner |
|---|---|---|
| Munich | 20 June 2025 | Berger, Josef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 4312

20-06-2025

| Patent document cited in search report | Publication date | Patent family member(s) | | Publication date |
|---|---|---|---|---|
| US 2018004171 A1 | 04-01-2018 | US | 2018004171 A1 | 04-01-2018 |
| | | US | 2020041965 A1 | 06-02-2020 |
| | | US | 2021034022 A1 | 04-02-2021 |
| US 2015198345 A1 | 16-07-2015 | CN | 104776553 A | 15-07-2015 |
| | | US | 2015198345 A1 | 16-07-2015 |
| | | US | 2018348720 A1 | 06-12-2018 |
| US 2015045962 A1 | 12-02-2015 | US | 2013085614 A1 | 04-04-2013 |
| | | US | 2015045962 A1 | 12-02-2015 |
| | | US | 2016195888 A1 | 07-07-2016 |
| | | US | 2019187632 A1 | 20-06-2019 |
| | | US | 2021356916 A1 | 18-11-2021 |

EPO FORM P0459

**REFERENCES CITED IN THE DESCRIPTION**

**Patent documents cited in the description**

- US 2018004171 A1
- US 2015198345 A1
- US 2015045962 A1

**Non-patent literature cited in the description**

- Regression-based model error compensation for hierarchical MPC building energy management system. **THOMAS SCHMITT et al.** arxiv.org. Cornell University Library
- **J. ENGEL** ; **T. SCHMITT** ; **T. RODEMANN** ; **J. ADAMY**. Hierarchical economic model predictive control approach for a building energy management system with scenario-driven EV charging. *IEEE Transactions on Smart Grid*, 2022, 3082-3093
- Regression-based model error compensation for hierarchical MPC building energy management system. **T. SCHMITT** ; **J. ENGEL** ; **T. RODEMANN**. IEEE Conference on Control Technology and Applications (CCTA). IEEE, 2023
- **M. STADIE** ; **T. RODEMANN** ; **A. BURGER** ; **F. JOMRICH** ; **S. LIMMER** ; **S. REBHAN** ; **H. SAEKI** ; **V2B VEHICLE TO BUILDING CHARGING MANAGER**. EVTeC: 5th International Electric Vehicle Technology Conference 2021. Japanese Society of Automotive Engineers, 2021
- Multi-objective building energy management optimization with model predictive control. **T. SCHMITT**. Ph.D. thesis. Technische Universit'' at Darmstadt, 2022
- **A. CASTELLANI** ; **S. SCHMITT** ; **S. SQUARTINI**. Real-world anomaly detection by using digital twin systems and weakly supervised learning. *IEEE Transactions on Industrial Informatics*, 2021, vol. 17 (7), 4733-4742
- **T. SCHMITT** ; **J. ENGEL** ; **M. HOFFMANN** ; **T. RODEMANN**. PARODIS: One MPC framework to control them all. *IEEE Conference on Control Technology and Applications (CCTA)*, 2021, 466-471
- **C. WANG** ; **T. BÄCK** ; **H. H. HOOS** ; **M. BARATCHI** ; **S. LIMMER** ; **M. OLHOFER**. Automated machine learning for short-term electric load forecasting. *IEEE Symposium Series on Computational Intelligence (SSCI)*, 2019, 314-321
- **T. SCHMITT** ; **T. RODEMANN** ; **J. ADAMY**. The cost of photovoltaic forecasting errors in microgrid control with peak pricing. *Energies*, 2021, vol. 14 (9), https://www.mdpi.com/1996-1073/14/9/2569
- **T. SCHMITT** ; **T. RODEMANN** ; **J. ADAMY**. Multi-objective model predictive control for microgrids. *Automatisierungstechnik*, 2020, vol. 68 (8), 687-702, https://www.honda-ri.de/pubs/pdf/4361.pdf
- Application of Pareto optimization in an economic model predictive controlled microgrid. **T. SCHMITT** ; **J. ENGEL** ; **T. RODEMANN** ; **J. ADAMY**. Mediterranean Conference on Control and Automation (MED). IEEE, 868-874
- **T. SCHMITT** ; **M. HOFFMANN** ; **T. RODEMANN** ; **J. ADAMY**. Incorporating human preferences in decision making for dynamic multiobjective optimization in Model Predictive Control. *Inventions*, 2022, vol. 7 (3)